# EUROPEAN PATENT APPLICATION

(11) **EP 4 787 832 A1**
(43) Date of publication of application: **05.08.2026**
(21) Application number: 24876137.1
(22) Date of filing: 04.07.2024
(51) Int. Cl.: H04N 13/122

(54) **ENCODING METHOD, DECODING METHOD, AND TERMINAL-CLOUD COLLABORATIVE SYSTEM**

(30) Priority: 12.10.2023 CN 202311322747
(71) Applicant: HUAWEI TECHNOLOGIES CO., LTD., Shenzhen 518129 (CN)
(72) Inventor: LIN, Zehui, Shenzhen, Guangdong 518129 (CN); ZHAO, Yuxin, Shenzhen, Guangdong 518129 (CN); WANG, Shi, Shenzhen, Guangdong 518129 (CN); CHEN, Weilan, Shenzhen, Guangdong 518129 (CN); CAI, Kangying, Shenzhen, Guangdong 518129 (CN)
(74) Representative: Eisenführ Speiser
(86) International application number: PCT/CN2024/103574
(87) International publication number: WO 2025/077316

(57) **Abstract**

Embodiments of this application provide an encoding and decoding method and a device-cloud collaboration system. The encoding and decoding method is implemented based on the device-cloud collaboration system, and can be used to reduce a total device-cloud bit rate while ensuring rendering of an image on a device side. The encoding method includes: performing rendering on a three-dimensional scene to obtain a rendered image, where an intermediate rendering result is generated in the rendering process, and the intermediate rendering result includes a first intermediate rendering result; performing a target operation on a reconstructed image based on the first intermediate rendering result, to generate a virtual reference block; predicting the rendered image based on the virtual reference block, to obtain a predicted image; and encoding a residual image between the predicted image and the rendered image to obtain a bitstream. The target operation includes at least one of reprojection, validity check, weighted averaging, hole filling, or intra-frame noise reduction.

## Description

This application claims priority to Chinese Patent Application No. 202311322747.4, filed with the China National Intellectual Property Administration on October 12, 2023 and entitled "ENCODING AND DECODING METHOD AND DEVICE-CLOUD COLLABORATION SYSTEM", which is incorporated herein by reference in its entirety.

### TECHNICAL FIELD

Embodiments of this application relate to the encoding and decoding field, and in particular, to an encoding and decoding method and a device-cloud collaboration system.

### BACKGROUND

In many scenarios (such as games, virtual reality (Virtual Reality, VR)/augmented reality (Augmented Reality, AR)), rendering needs to be performed to generate an image, so that the obtained image is more realistic. This improves user experience. Rendering requires strong computational power. Limited by objective physical conditions such as a device size and power consumption, computational power of a device-side device is usually far weaker than that of a cloud-side server. Therefore, rendering is usually deployed on the cloud-side server. The cloud-side server performs rendering, compresses a rendered image/video, and sends the compressed rendered image/video to the device-side device for display by the device-side device.

As people's requirements for rendering quality continuously increase and definition of display devices is continuously improved, image quality and resolution of a rendered image/video are continuously improved, resulting in an increase in bit rate overheads of the rendered image/video after compression.

In the conventional technology, a cloud-side server usually encodes and transmits a rendered low-resolution image/video, and transmits, to a device-side device, an intermediate rendering result generated in a process of rendering a high-resolution image/video. The device-side device performs, based on the intermediate rendering result delivered by the cloud-side server, upsampling on the rendered low-resolution image/video delivered by a cloud side, to generate the high-resolution to-be-displayed image/video for display. However, this can reduce bit rate overheads to some extent, with still low encoding efficiency yet.

### SUMMARY

In view of this, this application provides an encoding and decoding method and a device-cloud collaboration system. The encoding and decoding method is implemented based on the device-cloud collaboration system, and can be used to reduce a total device-cloud bit rate while ensuring rendering of an image on a device side.

According to a first aspect, an embodiment of this application provides an encoding method, applied to a cloud-side device, where the method includes: performing rendering on a three-dimensional scene to obtain a rendered image, where an intermediate rendering result is generated in the rendering process, and the intermediate rendering result includes a first intermediate rendering result; performing a target operation on a reconstructed image based on the first intermediate rendering result, to generate a virtual reference block; predicting the rendered image based on the virtual reference block, to obtain a predicted image; and encoding a residual image between the predicted image and the rendered image to obtain a bitstream. The target operation includes at least one of reprojection, validity check, weighted averaging, hole filling, or intra-frame noise reduction.

According to the method provided in embodiments of this application, the virtual reference block may be generated based on an intermediate rendering result generated in the rendering process through reprojection, validity check, weighted averaging, hole filling, intra-frame noise reduction, or in another manner. The generated virtual reference block may provide a more accurate reference for encoding and decoding of the rendered image, thereby improving inter prediction accuracy, and further improving encoding efficiency and reducing a bit rate. In this way, a total device-cloud bit rate can be reduced while ensuring rendering of an image on a device side.

It may be understood that a virtual reference frame is also a virtual reference block, in other words, the virtual reference frame may be considered as a virtual reference block.

In a possible implementation, when a target condition is met, the target operation is performed on a reconstructed image of an encoded image based on the first intermediate rendering result.

For example, the target condition may be related to a capability of a device-side device, a target similarity, or a parameter of a prediction module.

The target similarity is a similarity between the virtual reference block and a to-be-encoded frame, and the parameter of the prediction module indicates whether inter prediction is used and/or whether the virtual reference block is used for inter prediction.

For example, that the target is met may be that the inter prediction is used.

For another example, that the target is met may be that the virtual reference block can be used for the inter prediction.

For another example, that the target is met may be that the capability of the device-side device meets a requirement for generating the virtual reference frame.

According to the method provided in embodiments of this application, whether to perform the target operation is determined based on the target condition, thereby ensuring that the total device-cloud bit rate is reduced while the image rendered on the device side is not affected.

In a possible implementation, the bitstream includes first indication information, and when the first indication information is a first value, the bitstream further includes second indication information; and/or when the second indication information is a second value, the bitstream further includes third indication information.

For example, the first indication information may indicate whether to perform the target operation. The second indication information may indicate a method used for the target operation. The second indication information may indicate a parameter related to the method used for the target operation.

For another example, that the first indication information is the first value may indicate that the target step is performed. That the second indication information is the second value may indicate a method used for the target operation.

For another example, if the target operation includes reprojection, validity check, weighted averaging, hole filling, and intra-frame noise reduction, the first indication information may be five flag values, and the five flag values respectively indicate whether to perform reprojection, validity check, weighted averaging, hole filling, and intra-frame noise reduction.

According to the method provided in embodiments of this application, the generation step of the virtual reference block and content of the generation step may be further adjusted based on the capability of the device-side device, thereby ensuring that the total device-cloud bit rate is reduced while the image rendered on the device side is not affected.

In a possible implementation, whether to generate the virtual reference block may be further determined based on device capability information.

For example, when the cloud-side device learns that the capability of the device-side device is sufficient to generate all virtual reference blocks, an encoder may be allowed to autonomously choose whether to perform encoding based on an original reference block or perform encoding by generating the virtual reference block.

For another example, when the cloud side learns that the capability of the device-side device is insufficient to generate all virtual reference blocks, only the cloud-side device generates all virtual reference blocks, and the encoder is allowed to autonomously chooses the virtual reference block or the original reference block for encoding.

In a possible implementation, the bitstream includes fourth indication information, and when the fourth indication information is a fourth value, the bitstream further includes fifth indication information.

In a possible implementation, the fourth indication information and/or the fifth indication information may be determined based on the device capability information.

In a possible implementation, the fourth indication information indicates a quantity of to-be-generated virtual reference blocks.

In a possible implementation, the fifth indication information indicates a virtual reference block selection result, that is, indicates which virtual reference blocks are to be generated.

In a possible implementation, the first intermediate rendering result may be determined based on the target operation.

According to the method provided in embodiments of this application, the required first intermediate rendering result may be selected from the intermediate rendering result based on the target operation. In this way, a quantity of intermediate rendering results is reduced, and rendering efficiency is improved.

In a possible implementation, validity check may be performed on a reprojection pixel in the reconstructed image based on the first intermediate rendering result, to obtain a validity check result, where the validity check result indicates whether a to-be-detected pixel of a to-be-generated virtual reference block passes validity check, and the validity check result is used to generate the virtual reference block.

It may be understood that some pixels of the to-be-generated virtual reference block may be blocked by a foreground object in the reconstructed image, and are exposed only in a current frame of the to-be-generated virtual reference block. Therefore, corresponding pixels cannot be mapped in the reconstructed image. If these pixels are not removed, incorrect pixel values are obtained in the virtual reference block, and "ghosting" is caused. Therefore, in embodiments of this application, a defective pixel is determined based on the reprojection pixel that is of the to-be-detected pixel in the to-be-generated virtual reference block and that is in the reconstructed image, and the defective pixel is removed during reprojection, so that a more accurate virtual reference block is obtained through prediction, thereby improving encoding efficiency.

In a possible implementation, the reprojection pixel is inversely reprojected into the to-be-generated virtual reference block based on the first intermediate rendering result, to obtain inverse reprojection pixel coordinates of the reprojection pixel; and the validity check result is obtained based on the inverse reprojection pixel coordinates and pixel coordinates of the to-be-detected pixel.

It can be learned that, according to the method provided in embodiments of this application, the defective pixel may be determined based on the pixel coordinates of the to-be-detected pixel, and the defective pixel in the reprojection is removed, so that a more accurate virtual reference block is obtained through prediction, thereby improving encoding efficiency.

In a possible implementation, the reprojection pixel and the to-be-detected pixel may be projected into a world coordinate system based on the first intermediate rendering result, to obtain world coordinates of the reprojection pixel and world coordinates of the to-be-detected pixel; and the validity check result is obtained based on the world coordinates of the reprojection pixel and the world coordinates of the to-be-detected pixel.

It can be learned that, according to the method provided in embodiments of this application, the defective pixel may be determined based on the world coordinates of the to-be-detected pixel, and the defective pixel in the reprojection is removed, so that a more accurate virtual reference block is obtained through prediction, thereby improving encoding efficiency.

In a possible implementation, the validity check result may be obtained based on the first intermediate rendering result, target information corresponding to the reprojection pixel, and target information of the to-be-detected pixel, where the target information includes at least one of an object identifier (Object ID), a mesh identifier (Mesh ID), or a material identifier (Material ID).

In a possible implementation, weighted averaging may be performed on the reconstructed image based on the first intermediate rendering result, to obtain a weighted averaging result, where the weighted averaging result indicates a weighted averaged pixel value of the to-be-generated virtual reference block, and the weighted averaging result is used to generate the virtual reference block.

It can be learned that, in this embodiment, a more appropriate pixel value may be provided for a pixel in the virtual reference block based on a pixel value of a pixel in the reconstructed image.

In a possible implementation, weighted averaging is performed based on the first intermediate rendering result, the pixel value of the pixel in the reconstructed image, and an image sequence number of the reconstructed image, to obtain the weighted averaging result.

It may be understood that, a reconstructed image whose image sequence number is closer to that of the virtual reference block has a higher correlation with the virtual reference block. Therefore, a larger weight may be allocated to a closer reprojection pixel value, and a smaller weight may be allocated to a farther reprojection pixel value, thereby providing a more appropriate pixel value for the pixel in the virtual reference block.

In a possible implementation, weighted averaging may be performed based on the first intermediate rendering result, the pixel value of the pixel in the reconstructed image, world coordinates of the pixel in the reconstructed image, and world coordinates of a pixel in the to-be-generated virtual reference block, to obtain the weighted averaging result.

It may be understood that, a smaller pixel world coordinate error between the reconstructed image and the to-be-generated virtual reference block indicates a higher correlation between the reconstructed image and the to-be-generated virtual reference block. Therefore, a larger weight may be allocated to a reprojection pixel value with a smaller pixel world coordinate error. A larger pixel world coordinate error between the reconstructed image and the to-be-generated virtual reference block indicates a lower correlation between the reconstructed image and the to-be-generated virtual reference block. Therefore, a smaller weight may be allocated to a reprojection pixel value with a smaller pixel world coordinate error. In this way, a more appropriate pixel value is provided for the pixel in the virtual reference block.

In a possible implementation, weighted averaging is performed based on the first intermediate rendering result, the pixel value of the pixel in the reconstructed image, pixel coordinates of the pixel in the reconstructed image, and pixel coordinates of the pixel in the to-be-generated virtual reference block, to obtain the weighted averaging result.

It may be understood that, a smaller pixel coordinate error between the reconstructed image and the to-be-generated virtual reference block indicates a higher correlation between the reconstructed image and the to-be-generated virtual reference block. Therefore, a larger weight may be allocated to a reprojection pixel value with a smaller pixel coordinate error. A larger pixel coordinate error between the reconstructed image and the to-be-generated virtual reference block indicates a lower correlation between the reconstructed image and the to-be-generated virtual reference block. Therefore, a smaller weight may be allocated to a reprojection pixel value with a smaller pixel coordinate error. In this way, a more appropriate pixel value is provided for the pixel in the virtual reference block.

In a possible implementation, hole filling may be performed on the reconstructed image based on the first intermediate rendering result, to obtain a hole filling result, where the hole filling result indicates a pixel value of a to-be-filled pixel after hole filling, the to-be-filled pixel is a pixel that fails to pass validity check in the to-be-generated virtual reference block, and the hole filling result is used to generate the virtual reference block.

It can be learned that, according to the method provided in embodiments of this application, hole filling may be performed on the pixel that fails to pass validity check in the to-be-generated virtual reference block, to replace an incorrect predicted pixel value with a more appropriate predicted pixel value, thereby improving accuracy of the virtual reference block or the virtual reference block, and improving encoding efficiency.

In a possible implementation, hole filling may be performed on the reconstructed image based on the first intermediate rendering result and the reprojection pixel in the reconstructed image, to obtain the hole filling result.

It can be learned that, according to the method provided in embodiments of this application, hole filling may be performed, based on the reprojection pixel in the reconstructed image, on the pixel that fails to pass validity check in the to-be-generated virtual reference block, to replace an incorrect predicted pixel value with a more appropriate predicted pixel value, thereby improving accuracy of the virtual reference block or the virtual reference block, and improving encoding efficiency.

In a possible implementation, hole filling may be performed on the reconstructed image based on the first intermediate rendering result and a target pixel of the reprojection pixel in the reconstructed image, to obtain the hole filling result, where the target pixel is a pixel whose distance from the reprojection pixel is less than a first threshold in the reconstructed image.

It can be learned that, according to the method provided in embodiments of this application, hole filling may be performed, based on the target pixel of the reprojection pixel in the reconstructed image, on the pixel that fails to pass validity check in the to-be-generated virtual reference block, to replace an incorrect predicted pixel value with a more appropriate predicted pixel value, thereby improving accuracy of the virtual reference block or the virtual reference block, and improving encoding efficiency.

In a possible implementation, hole filling may be performed on the reconstructed image based on the first intermediate rendering result and a non-to-be-filled pixel, to obtain the hole filling result, where the non-to-be-filled pixel is a pixel that passes validity check in the to-be-generated virtual reference block.

It can be learned that, according to the method provided in embodiments of this application, hole filling may be performed, based on the pixel that passes validity check in the to-be-generated virtual reference block, on the pixel that fails to pass validity check in the to-be-generated virtual reference block, to replace an incorrect predicted pixel value with a more appropriate predicted pixel value, thereby improving accuracy of the virtual reference block or the virtual reference block, and improving encoding efficiency.

According to a second aspect, an embodiment of this application further provides a decoding method, applied to a device-side device. The method includes: receiving a bitstream; decoding the bitstream to obtain a residual image of a current image; performing rendering on a three-dimensional scene to obtain a rendered image, where an intermediate rendering result is generated in the rendering process, and the intermediate rendering result includes a first intermediate rendering result; performing a target operation on a reconstructed image based on the first intermediate rendering result, to generate a virtual reference block, where the target operation includes at least one of reprojection, validity check, weighted averaging, hole filling, or intra-frame noise reduction; predicting the rendered image based on the virtual reference block, to obtain a predicted image; and performing reconstruction based on the predicted image and the residual image, to obtain a reconstructed image of the current frame.

In a possible implementation, device-side device information may be sent to a cloud-side device.

In a possible implementation, the bitstream may be decoded to obtain the residual image of the current image; and the bitstream is decoded to obtain indication information, where the indication information includes first indication information, and when the first indication information is a first value, the indication information further includes second indication information; and/or when the second indication information is a second value, the indication information further includes third indication information.

In a possible implementation, the indication information from the cloud-side device is received, where the indication information includes the first indication information, and when the first indication information is the first value, the indication information further includes the second indication information; and/or when the second indication information is the second value, the indication information further includes the third indication information.

In a possible implementation, the first intermediate rendering result is determined based on the target operation.

In a possible implementation, validity check may be performed on a reprojection pixel in the reconstructed image based on the first intermediate rendering result, to obtain a validity check result, where the validity check result indicates whether a to-be-detected pixel of a to-be-generated virtual reference block passes validity check, and the validity check result is used to generate the virtual reference block.

In a possible implementation, the reprojection pixel may be inversely reprojected into the to-be-generated virtual reference block based on the first intermediate rendering result, to obtain inverse reprojection pixel coordinates of the reprojection pixel; and the validity check result is obtained based on the inverse reprojection pixel coordinates and pixel coordinates of the to-be-detected pixel.

In a possible implementation, the reprojection pixel and the to-be-detected pixel may be projected into a world coordinate system based on the first intermediate rendering result, to obtain world coordinates of the reprojection pixel and world coordinates of the to-be-detected pixel; and the validity check result is obtained based on the world coordinates of the reprojection pixel and the world coordinates of the to-be-detected pixel.

In a possible implementation, the validity check result may be obtained based on the first intermediate rendering result, target information corresponding to the reprojection pixel, and target information of the to-be-detected pixel, where the target information includes at least one of an object identifier (Object ID), a mesh identifier (Mesh ID), or a material identifier (Material ID).

In a possible implementation, weighted averaging may be performed on the reconstructed image based on the first intermediate rendering result, to obtain a weighted averaging result, where the weighted averaging result indicates a weighted averaged pixel value of the to-be-generated virtual reference block, and the weighted averaging result is used to generate the virtual reference block.

In a possible implementation, weighted averaging may be performed based on the first intermediate rendering result, a pixel value of a pixel in the reconstructed image, and an image sequence number of the reconstructed image, to obtain the weighted averaging result.

In a possible implementation, weighted averaging may be performed based on the first intermediate rendering result, the pixel value of the pixel in the reconstructed image, world coordinates of the pixel in the reconstructed image, and world coordinates of a pixel in the to-be-generated virtual reference block, to obtain the weighted averaging result.

In a possible implementation, weighted averaging may be performed based on the first intermediate rendering result, the pixel value of the pixel in the reconstructed image, pixel coordinates of the pixel in the reconstructed image, and pixel coordinates of the pixel in the to-be-generated virtual reference block, to obtain the weighted averaging result.

In a possible implementation, hole filling may be performed on the reconstructed image based on the first intermediate rendering result, to obtain a hole filling result, where the hole filling result indicates a pixel value of a to-be-filled pixel after hole filling, the to-be-filled pixel is a pixel that fails to pass validity check in the to-be-generated virtual reference block, and the hole filling result is used to generate the virtual reference block.

In a possible implementation, hole filling may be performed on the reconstructed image based on the first intermediate rendering result and the reprojection pixel in the reconstructed image, to obtain the hole filling result.

In a possible implementation, hole filling may be performed on the reconstructed image based on the first intermediate rendering result and a target pixel of the reprojection pixel in the reconstructed image, to obtain the hole filling result, where the target pixel is a pixel whose distance from the reprojection pixel is less than a first threshold in the reconstructed image.

In a possible implementation, hole filling may be performed on the reconstructed image based on the first intermediate rendering result and a non-to-be-filled pixel, to obtain the hole filling result, where the non-to-be-filled pixel is a pixel that passes validity check in the to-be-generated virtual reference block.

According to a third aspect, an embodiment of this application further provides an encoding apparatus, including a rendering module, an encoder, and a communication module. The rendering module is configured to perform rendering on a three-dimensional scene to obtain a rendered image, where an intermediate rendering result is generated in the rendering process, and the intermediate rendering result includes a first intermediate rendering result. The rendering module is further configured to perform a target operation on a reconstructed image based on the first intermediate rendering result, to generate a virtual reference block, where the target operation includes at least one of reprojection, validity check, weighted averaging, hole filling, or intra-frame noise reduction. The encoder is configured to predict the rendered image based on the virtual reference block, to obtain a predicted image. The encoder is further configured to encode a residual image between the predicted image and the rendered image to obtain a bitstream. The communication module is configured to send the bitstream.

According to a fourth aspect, an embodiment of this application further provides a decoding apparatus, including a rendering module, a decoder, and a communication module. The communication module is configured to receive a bitstream. The decoder is configured to decode the bitstream to obtain a residual image of a current image. The rendering module is configured to perform rendering on a three-dimensional scene to obtain a rendered image, where an intermediate rendering result is generated in the rendering process, and the intermediate rendering result includes a first intermediate rendering result. The rendering module is further configured to perform a target operation on a reconstructed image based on the first intermediate rendering result, to generate a virtual reference block, where the target operation includes at least one of reprojection, validity check, weighted averaging, hole filling, or intra-frame noise reduction. The decoder is further configured to predict the rendered image based on the virtual reference block, to obtain a predicted image. The decoder is further configured to perform reconstruction based on the predicted image and the residual image, to obtain a reconstructed image of the current frame.

According to a fifth aspect, an embodiment of this application further provides a device-cloud collaboration system, including the encoding apparatus in any implementation of the third aspect and the decoding apparatus in any implementation of the fourth aspect.

According to a sixth aspect, an embodiment of this application provides a cloud-side device, including a memory and a processor. The memory is coupled to the processor, the memory stores program instructions, and when the program instructions are executed by the processor, the server is enabled to perform the encoding method according to any one of the first aspect or the possible implementations of the first aspect.

According to a seventh aspect, an embodiment of this application provides a device-side device, including a memory and a processor. The memory is coupled to the processor, the memory stores program instructions, and when the program instructions are executed by the processor, the terminal device is enabled to perform the decoding method according to any one of the second aspect or the possible implementations of the second aspect.

According to an eighth aspect, an embodiment of this application provides a chip, including one or more interface circuits and one or more processors. The interface circuit is configured to receive a signal from a memory of a cloud-side device, and send the signal to the processor. The signal includes computer instructions stored in the memory. When the processor executes the computer instructions, the cloud-side device is enabled to perform the encoding method according to any one of the first aspect or the possible implementations of the first aspect.

According to a ninth aspect, an embodiment of this application provides a chip, including one or more interface circuits and one or more processors. The interface circuit is configured to receive a signal from a memory of a device-side device, and send the signal to the processor. The signal includes computer instructions stored in the memory. When the processor executes the computer instructions, the device-side device is enabled to perform the decoding method according to any one of the second aspect or the possible implementations of the second aspect.

According to a tenth aspect, an embodiment of this application provides a computer-readable storage medium. The computer-readable storage medium stores a computer program. When the computer program is run on a computer or a processor, the computer or the processor is enabled to perform the encoding method according to any one of the first aspect or the possible implementations of the first aspect.

According to an eleventh aspect, an embodiment of this application provides a computer-readable storage medium. The computer-readable storage medium stores a computer program. When the computer program is run on a computer or a processor, the computer or the processor is enabled to perform the decoding method according to any one of the second aspect or the possible implementations of the second aspect.

According to a twelfth aspect, an embodiment of this application provides a computer program product. The computer program product includes computation instructions. When the computation instructions are executed by a computer or a processor, the computer or the processor is enabled to perform the encoding method according to any one of the first aspect or the possible implementations of the first aspect.

According to a thirteenth aspect, an embodiment of this application provides a computer program product. The computer program product includes computation instructions. When the computation instructions are executed by a computer or a processor, the computer or the processor is enabled to perform the decoding method according to any one of the second aspect or the possible implementations of the second aspect.

According to a fourteenth aspect, an embodiment of this application provides an encoder, including a processing circuit, configured to perform the encoding method according to any one of the first aspect or the possible implementations thereof.

According to a fifteenth aspect, an embodiment of this application provides a decoder, including a processing circuit, configured to perform the decoding method according to any one of the second aspect or the possible implementations thereof.

According to a sixteenth aspect, an embodiment of this application provides an encoder, including one or more processors and a non-transitory computer-readable storage medium that is coupled to the processor and stores a program executed by the processor, where when the program is executed by the processor, the encoder is enabled to perform the encoding method according to any one of the first aspect or the possible implementations thereof.

According to a seventeenth aspect, an embodiment of this application provides a decoder, including one or more processors and a non-transitory computer-readable storage medium that is coupled to the processor and stores a program executed by the processor, where when the program is executed by the processor, the decoder is enabled to perform the decoding method according to any one of the second aspect or the possible implementations thereof.

According to an eighteenth aspect, an embodiment of this application provides a non-transitory computer-readable storage medium, including program code. When the program code is executed by a computer device, the computer device is configured to perform the method according to any one of the first aspect, the second aspect, or the possible implementations.

According to a nineteenth aspect, an embodiment of this application provides a non-transitory storage medium, including a bitstream of the method according to any one of the first aspect, the second aspect, or the possible implementations.

The computer storage medium, the computer program product, and the chip provided in embodiments each are configured to perform the method provided above. Therefore, for beneficial effect that can be achieved, refer to beneficial effect of the method provided above. Details are not described herein again.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some embodiments of embodiments of this application, and a person of ordinary skill in the art may still derive other accompanying drawings from these accompanying drawings without creative efforts.
FIG. 1 is a diagram of an application scenario according to an embodiment of this application;
FIG. 2 is a diagram of a device-cloud collaboration system according to an embodiment of this application;
FIG. 3 is a diagram of an encoding process according to an embodiment of this application;
FIG. 4 is a diagram of a validity check process according to an embodiment of this application;
FIG. 5 is a diagram of an encoding framework according to an embodiment of this application;
FIG. 6 is a diagram of another encoding framework according to an embodiment of this application;
FIG. 7 is a diagram of a decoding process according to an embodiment of this application;
FIG. 8 is a diagram of a decoding framework according to an embodiment of this application;
FIG. 9 is a diagram of another decoding framework according to an embodiment of this application;
FIG. 10 is a diagram of a structure of a chip according to an embodiment of this application;
FIG. 11 is a diagram of a structure of an electronic device according to an embodiment of this application; and
FIG. 12 is a diagram of a structure of another electronic device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object and a second target object are used to distinguish between different target objects, but are not used to describe a particular order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. For example, a plurality of processing units are two or more processing units, and a plurality of systems are two or more systems.

Before the solutions provided in embodiments of this application are described, terms in embodiments of this application are first explained.

Intermediate rendering result: The intermediate rendering result is intermediate data that is generated by a graphics rendering engine in a process of generating a to-be-displayed image/video and that is used to generate the to-be-displayed image/video. The intermediate rendering result includes information generated in a rendering process, such as a computer graphic motion vector (computer graphic motion vector, CGMV), a low-quality rendering result, a position map (position map), a normal map (normal map), an albedo map (albedo map), a specular intensity map (specular intensity map), a mesh ID, a material ID, a depth map, and camera information (for example, a camera pose change in each frame).

Rendering parameter: The rendering parameter is an input of a graphics rendering engine, and includes information such as various types of parameters used for rendering, position vectors and color vectors of all light sources, a position vector of a player or an observer, a sampling manner of each texture, position coordinates of each scene object, a movement track of a moving object, and a skeleton animation parameter.

Auxiliary information: The auxiliary information includes an intermediate rendering result and a rendering parameter.

Bitstream auxiliary information: The bitstream auxiliary information is auxiliary information written into a bitstream.

CGMV: The CGMV is data generated by a graphics engine and describes a correspondence between pixels of any two frames of rendered images.

Virtual reference frame: The virtual reference frame is also a form of a virtual reference block, and is a reference frame based on prior information. The prior information includes decoded information inside an encoder and information other than a to-be-encoded video. The virtual reference frame may be used as supplementary information for inter-frame encoding, to further remove time-domain redundancy of a video.

Reprojection: The reprojection is a computational process of mapping a pixel in a to-be-reconstructed frame to a corresponding pixel of the pixel in a historical frame (a reconstructed image) based on one or more of information such as a depth of an intermediate rendering result, camera information, and a forward CGMV. Forward in the forward CGMV indicates a previous frame, namely, an image frame earlier in time or an image frame with a smaller image sequence number.

Inverse reprojection: The inverse reprojection is a computational process of mapping a reprojection pixel that is in a historical frame and that is of a pixel in a to-be-reconstructed frame back to a corresponding pixel of the reprojection pixel in the to-be-reconstructed frame based on one or more of information such as a depth of an intermediate rendering result, camera information, and a backward CGMV. Backward in the backward CGMV indicates a subsequent frame, namely, an image frame later in time or an image frame with a larger image sequence number.

Validity check: Due to the limitation of prior information, there may be a mispredicted pixel in a reprojection result. Validity of the pixel may be verified based on one or more of information such as a depth of an intermediate rendering result, camera information, and a backward CGMV.

Ghosting: In a process of generating a virtual reference frame, ghosting is an image defect in the virtual reference frame caused by an inaccurate predicted pixel value mapped based on CGMV information due to insufficient prior information.

Hole: The hole is a set of pixels without content in an image of a virtual reference frame, includes pixels whose predicted pixel values cannot be mapped due to insufficient prior information, and empty pixels resulting from deghosting.

Filtering: Filtering is an operation of eliminating noise in a virtual reference frame.

Embodiments of this application provide an encoding and decoding method. The encoding and decoding method is implemented based on a device-cloud collaboration system, and can be used to reduce a total device-cloud bit rate while ensuring rendering of an image on a device side. A cloud-side device may be a server, a terminal device (for example, a mobile phone), or another device. A device-side device may be a terminal device or another device.

The following describes the encoding and decoding method provided in embodiments of this application by using an example in which the cloud-side device is a server and the device-side device is a terminal device.

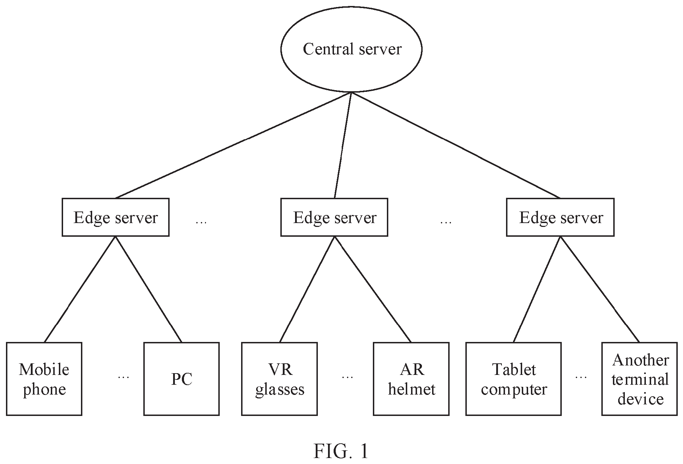

FIG. 1 is a diagram of an application scenario according to an embodiment of this application. The application scenario shown in FIG. 1 is a device-cloud collaborative rendering scenario. This application may be applied to various device-cloud collaboration scenarios such as a cloud game and a VR/AR conference. This is not limited in this application. In this application, the cloud game is used as an example for description.

As shown in FIG. 1, in a possible manner, a terminal device such as a mobile phone, a personal computer (Personal Computer, PC), VR glasses, an AR helmet, a tablet computer, or another terminal device may send a first rendering parameter to a central server (for example, a game server) through an edge server. Next, the central server may perform rendering on a three-dimensional scene based on a rendering parameter (the rendering parameter may include only a first rendering parameter uploaded by the terminal device, or include a first rendering parameter uploaded by the terminal device and a second rendering parameter generated by the central server), to obtain a rendered image (for example, a game image). Then, the central server encodes the rendered image based on some (referred to as a first intermediate rendering result subsequently) of intermediate rendering results generated in the rendering process, to obtain a bitstream, and distribute the bitstream to each terminal device through the edge server. Subsequently, the terminal device may perform rendering on the three-dimensional scene based on a rendering parameter (the rendering parameter includes the first rendering parameter and a fifth rendering parameter, the fifth rendering parameter is also generated by the terminal device, and the fifth rendering parameter may include a parameter that is the same as the second rendering parameter), and generate the first intermediate rendering result in the rendering process. Then, the terminal device decodes the bitstream based on the first intermediate rendering result, to obtain a reconstructed image.

As shown in FIG. 1, in a possible manner, a terminal device such as a mobile phone, a PC, VR glasses, an AR helmet, a tablet computer, or another terminal device may send a first rendering parameter to a central server through an edge server. Next, the central server may perform rendering on a three-dimensional scene based on a rendering parameter (the rendering parameter may include only a first rendering parameter uploaded by the terminal device, or include a first rendering parameter uploaded by the terminal device and a second rendering parameter generated by the server), to obtain a rendered image. Then, the central server encodes the rendered image based on a first intermediate rendering result generated in the rendering process, and encodes a second intermediate rendering result (the second intermediate rendering result is a part of the first intermediate rendering result), to obtain a bitstream, and distribute the bitstream to each terminal device through the edge server. Subsequently, the terminal device may perform rendering on the three-dimensional scene based on a rendering parameter (the rendering parameter includes the first rendering parameter and a fifth rendering parameter), and generate a third intermediate rendering result (the third intermediate rendering result is a part of the first intermediate rendering result other than the second intermediate rendering result) in the rendering process. Then, the terminal device generates a first intermediate rendering result based on the second intermediate rendering result and the third intermediate rendering result, and decodes the bitstream based on the first intermediate rendering result, to obtain a reconstructed image.

As shown in FIG. 1, in a possible manner, a terminal device such as a mobile phone, a PC, VR glasses, an AR helmet, a tablet computer, or another terminal device may send a first rendering parameter to a central server through an edge server. Next, the central server may perform rendering on a three-dimensional scene based on a rendering parameter (the rendering parameter includes a first rendering parameter uploaded by the terminal device and a second rendering parameter generated by the central server), to obtain a rendered image. Then, the central server encodes the rendered image based on a first intermediate rendering result generated in the rendering process, to obtain a bitstream, and write a third rendering parameter (the third rendering parameter includes all parameters or some parameters in the second rendering parameter) into the bitstream. Then, the central server distributes the bitstream to each terminal device through the edge server. Subsequently, the terminal device may perform rendering on the three-dimensional scene based on a rendering parameter (when the third rendering parameter includes all parameters in the second rendering parameter, the rendering parameter may include the first rendering parameter and the third rendering parameter obtained from the bitstream through parsing; or when the third rendering parameter includes some parameters in the second rendering parameter, the rendering parameter may include the first rendering parameter, the third rendering parameter obtained from the bitstream through parsing, and a fourth rendering parameter generated by the terminal device, and the fourth rendering parameter is a parameter other than the third rendering parameter in the second rendering parameter), and generate a first intermediate rendering result in the rendering process. Then, the terminal device decodes the bitstream based on the first intermediate rendering result, to obtain a reconstructed image.

As shown in FIG. 1, in a possible manner, a terminal device such as a mobile phone, a PC, VR glasses, an AR helmet, a tablet computer, or another terminal device may send a first rendering parameter to a central server through an edge server. Next, the central server may perform rendering on a three-dimensional scene based on a rendering parameter (including a first rendering parameter uploaded by the terminal device and a second rendering parameter generated by the central server), to obtain a rendered image. Then, the central server encodes the rendered image based on a first intermediate rendering result generated in the rendering process, and encodes a second intermediate rendering result, to obtain a bitstream, and write a third rendering parameter into the bitstream. Then, the central server distributes the bitstream to each terminal device through the edge server. Subsequently, the terminal device may perform rendering on the three-dimensional scene based on a rendering parameter (when the third rendering parameter includes all parameters in the second rendering parameter, the rendering parameter may include the first rendering parameter and the third rendering parameter obtained from the bitstream through parsing; or when the third rendering parameter includes some parameters in the second rendering parameter, the rendering parameter may include the first rendering parameter, the third rendering parameter obtained from the bitstream through parsing, and a fourth rendering parameter generated by the terminal device), and generate a third intermediate rendering result in the rendering process. Then, the terminal device generates a first intermediate rendering result based on the second intermediate rendering result and the third intermediate rendering result, and decodes the bitstream based on the first intermediate rendering result, to obtain a reconstructed image.

In this way, partial or all rendering is performed by the terminal device, and further, the server may not send an intermediate rendering result or send only some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured. In addition, a data amount of a rendering parameter is far less than a data amount of an intermediate rendering result. Therefore, even if the server in this application further sends the rendering parameter to the terminal device, bit rate overheads of a data stream transmitted by the server to the terminal device in this application are less than bit rate overheads of a transmitted data stream in the conventional technology.

For example, the rendering parameter may be all parameters that are input into a graphics rendering engine and that are required for rendering by the graphics rendering engine, and may include various parameters used for rendering, position vectors and color vectors of all light sources, a position vector of a player or an observer, information such as a sampling manner of each texture and position coordinates of an object in each scene, a movement track of a moving object, a skeleton animation parameter, and the like. This is not limited in this application. The first rendering parameter and the second rendering parameter may form the rendering parameter (namely, all parameters that are input into the graphics rendering engine and that are required for rendering by the graphics rendering engine). It should be noted that a type of a parameter included in the fifth rendering parameter generated by the terminal device is the same as a type of a parameter included in the second rendering parameter generated by the central server, and precision of the parameter included in the fifth rendering parameter is less than or equal to precision of the parameter included in the second rendering parameter.

For example, the intermediate rendering result may be intermediate data that is used to generate a to-be-displayed image (namely, the rendered image)/video (namely, a rendered video) and that is generated by the graphics rendering engine in a process of generating the to-be-displayed image/video. For example, the intermediate rendering result may include but is not limited to a computer graphics motion vector (Computer Graphics Motion Vector, CGMV), an intermediate rendered image (the intermediate rendered image is an image generated before a final rendered image (namely, the foregoing rendered image) is generated, calculation complexity of the intermediate rendered image is lower than calculation complexity of the rendered image, and the intermediate rendered image may be, for example, an intermediate rendered image on which indirect illumination rendering is not performed, an intermediate rendered image on which specular reflection is not performed, or an intermediate rendered image on which highlighting is not performed), a position map (position map), a normal map (normal map), an albedo map (albedo map), a specular intensity map (specular intensity map), a mesh identifier (Mesh ID), a material ID (Material ID) (each material map corresponds to one material ID), a render ID (render ID) (each object (or one three-dimensional object model) corresponds to one render ID), an object ID, and depth information. This is not limited in this application. The first intermediate rendering result is a part of all intermediate rendering results generated in the rendering process, and the second intermediate rendering result and the third intermediate rendering result may form the first intermediate rendering result. It should be noted that a type of an intermediate result included in the first intermediate rendering result generated by the terminal device is the same as a type of an intermediate result included in the first intermediate rendering result generated by the central server, and precision of the intermediate result included in the first intermediate rendering result generated by the terminal device is less than or equal to precision of the intermediate result included in the first intermediate rendering result generated by the central server.

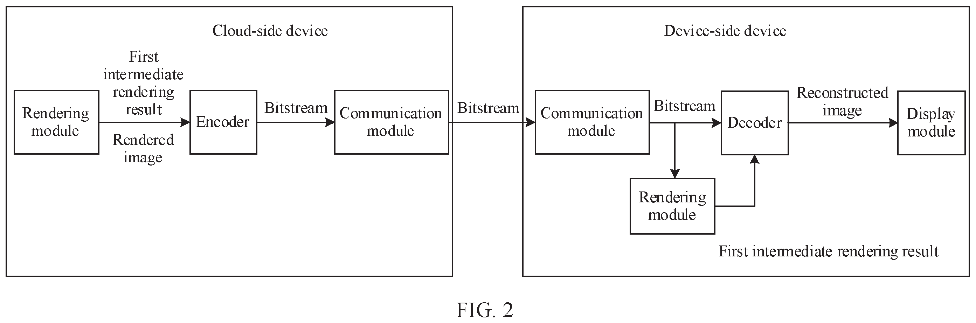

Based on the application scenario in FIG. 1, this application provides a device-cloud collaboration system, which may be shown in FIG. 2.

FIG. 2 is a diagram of a device-cloud collaboration system according to an embodiment of this application. The device-cloud collaboration system shown in FIG. 2 may include a cloud-side device and a device-side device.

Refer to FIG. 2. For example, the cloud-side device may be the central server in FIG. 1. The server may be a single server or a server cluster. This is not limited in this application.

For example, the cloud-side device may include a rendering module, an encoder, and a communication module. It should be understood that FIG. 2 is merely an example of this application. The cloud-side device in this application may include more or fewer modules than those shown in FIG. 2. This is not limited in this application.

For example, the rendering module may be configured to perform rendering on a three-dimensional scene based on a rendering parameter, to obtain a rendered image and an intermediate rendering result.

For example, the encoder may be configured to: encode the rendered image based on a first intermediate rendering result, encode a second intermediate rendering result, and write a second rendering parameter into a bitstream.

For example, the communication module may be configured to communicate with another electronic device, for example, may send, to the device-side device, the bitstream output by the encoder.

For example, the device-side device includes but is not limited to a personal computer, a computer workstation, a smartphone, a tablet computer, a server, a smart camera, an intelligent vehicle, another type of cellular phone, a media consumption device, a wearable device (for example, a VR/AR helmet or VR glasses), a set-top box, and a game console.

Still refer to FIG. 2. For example, the device-side device may include a communication module, a rendering module, a decoder, and a display module. It should be understood that FIG. 2 is merely an example of this application. The device-side device in this application may include more or fewer modules than those shown in FIG. 2. This is not limited in this application.

For example, the communication module may be configured to communicate with another electronic device, for example, receive the bitstream sent by the cloud-side device.

For example, the rendering module may be configured to perform rendering on a three-dimensional scene based on a rendering parameter, to obtain a first intermediate rendering result or a third intermediate rendering result. It should be understood that the rendering module may also generate a rendered image, but the rendered image is not used for subsequent display by the display module.

For example, the decoder may be configured to decode a bitstream based on the first intermediate rendering result, to obtain a reconstructed image.

For example, the display module may be configured to display the reconstructed image.

It should be understood that a video coding standard used by the encoder and the decoder is not limited in this application. For example, the video coding standard may include but is not limited to H.264/AVC (Advanced Video Coding, advanced video coding), H.265/HEVC (High Efficiency Video Coding, high efficiency video coding), H.266/VVC (Versatile Video Coding, versatile video coding), AV1 (AOMedia Video 1, where "AOMedia" is a video coding standard developed by the Alliance for Open Media), and the like, and extended standards of these video coding standards. In addition, the video coding standard may further include a new video coding standard and an extended standard that are generated with development of video encoding and decoding technologies.

The following describes an encoding and decoding process based on FIG. 1 and FIG. 2.

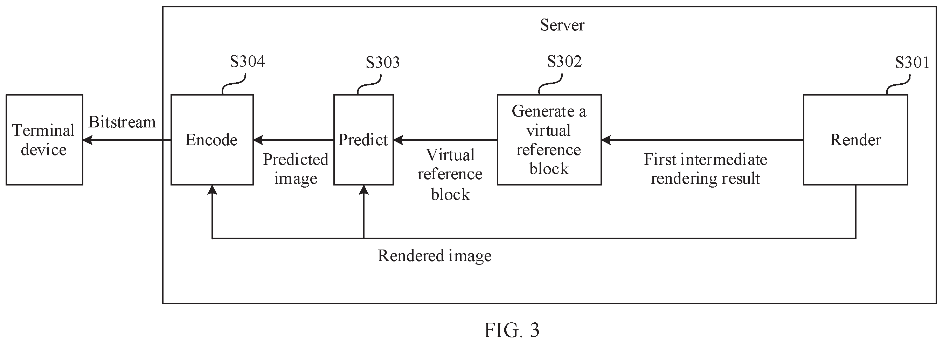

FIG. 3 is a diagram of an encoding process according to an embodiment of this application. In the embodiment in FIG. 3, an example in which the cloud-side device is a server, the device-side device is a terminal device, and one frame of rendered image is encoded is used for description.

S301: The server performs rendering on a three-dimensional scene to obtain a rendered image.

An intermediate rendering result is generated in the rendering process, and the intermediate rendering result includes a first intermediate rendering result.

In a possible implementation, the server may perform rendering on the three-dimensional scene based on a rendering parameter. The rendering parameter includes a first rendering parameter obtained from the terminal device.

For example, the server may obtain the rendering parameter, and then input the rendering parameter into a graphics rendering engine. The graphics rendering engine performs rendering on the three-dimensional scene based on the rendering parameter, to obtain the rendered image. The graphics rendering engine belongs to the rendering module in FIG. 2.

For example, the server may obtain the first rendering parameter (the first rendering parameter is generated by the terminal device) from the terminal device. In a possible manner, when the first rendering parameter generated by the terminal device is all parameters required for rendering by the graphics rendering engine, the server may determine the first rendering parameter as the rendering parameter. That is, the rendering parameter obtained by the server may include only the first rendering parameter. In a possible manner, when the first rendering parameter generated by the terminal device is some parameters required for rendering by the graphics rendering engine, the server may further generate a second rendering parameter, and then determine the first rendering parameter and the second rendering parameter as the rendering parameter. That is, the rendering parameter obtained by the server may include the first rendering parameter and the second rendering parameter. The first rendering parameter and the second rendering parameter are specifically described in a subsequent embodiment.

It should be noted that the server may obtain the first rendering parameter from the terminal device based on a preset periodicity. The preset periodicity may be set based on a requirement. This is not limited in this application. It should be understood that the first rendering parameter obtained by the server from the terminal device each time may be used to render one or more frames of images.

For example, the rendering process of the graphics rendering engine may be as follows: An image engine may perform geometric transform, projection transform, perspective transform, and window clipping on a three-dimensional object model in the three-dimensional scene based on the input rendering parameter, and then generate the rendered image based on obtained material and light shadow information.

In a possible implementation, the first intermediate rendering result may be determined based on a target operation.

For example, the graphics rendering engine in the rendering module generates the intermediate rendering result in the rendering process (the rendering process is a time period between a moment at which the graphics rendering engine obtains the rendering parameter and a moment at which the rendered image is obtained), and may select the first intermediate rendering result from the intermediate rendering result. Subsequently, the rendered image may be encoded based on the first intermediate rendering result.

For example, some intermediate rendering results may be selected from the intermediate rendering result as the first intermediate rendering result. For example, in this application, a manner of encoding the rendered image based on the first intermediate rendering result may be: generating a virtual reference block based on the first intermediate rendering result, and then encoding the rendered image based on the virtual reference block. Further, some intermediate rendering results that may be used to generate the virtual reference block may be selected from the intermediate rendering result as the first intermediate rendering result. For example, a CGMV, an intermediate rendered image, and the like are selected as the first intermediate rendering result. This is not limited in this application.

S302: The server performs the target operation based on the first intermediate rendering result, to generate the virtual reference block.

It may be understood that a virtual reference frame is also a virtual reference block, in other words, the virtual reference frame may be considered as a virtual reference block.

In a possible implementation, when a target condition is met, the target operation may be performed on a reconstructed image of an encoded image based on the first intermediate rendering result.

For example, the target condition may be related to a capability of the device-side device, a target similarity, or a parameter of a prediction module.

The target similarity is a similarity between the virtual reference block and a to-be-encoded frame, and the parameter of the prediction module indicates whether inter prediction is used and/or whether the virtual reference block is used for inter prediction.

The capability of the device-side device is specifically a capability of the virtual reference block supported by the device-side device.

For example, the capability of the device-side device may include parameters such as the virtual reference block (that is, whether an encoder of the device-side device supports generation of the virtual reference block), a quantity of supported virtual reference blocks, a validity check capability (that is, whether validity check is supported), a non-default parameter capability (that is, whether to support generation of the virtual reference block based on a non-default parameter), power consumption, a delay, and a frame rate.

For example, that the target is met may be that the inter prediction is used.

For another example, that the target is met may be that the virtual reference block can be used for inter prediction.

For another example, that the target is met may be that the capability of the device-side device meets a requirement for generating the virtual reference frame.

According to the method provided in embodiments of this application, whether to perform the target operation is determined based on the target condition, thereby ensuring that a total device-cloud bit rate is reduced while an image rendered on a device side is not affected.

In a possible implementation, a bitstream includes first indication information, and when the first indication information is a first value, the bitstream further includes second indication information; and/or when the second indication information is a second value, the bitstream further includes third indication information.

For example, the first indication information may indicate whether to perform the target operation. The second indication information may indicate a method used for the target operation. The second indication information may indicate a parameter related to the method used for the target operation.

For another example, that the first indication information is the first value may indicate that the target step is performed. That the second indication information is the second value may indicate the method used for the target operation.

For another example, if the target operation includes reprojection, validity check, weighted averaging, hole filling, and intra-frame noise reduction, the first indication information may be five flag values, and the five flag values respectively indicate whether to perform reprojection, validity check, weighted averaging, hole filling, and intra-frame noise reduction.

For another example, as shown in Table 1, in a possible implementation, the first indication information may include a plurality of flag bits, and each flag bit may indicate whether to perform one or more target operations. For example, a flag bit 1 indicates whether to perform reprojection, a flag bit 2 indicates whether to perform validity check, a flag bit 3 indicates whether to perform weighted averaging, a flag bit 4 indicates whether to perform hole filling, and a flag bit 5 indicates whether to perform intra-frame noise reduction. When a value of the flag bit 1 is 1, it indicates to perform reprojection; or when a value of the flag bit 1 is 0, it indicates not to perform reprojection.

**Table 1**

| First indication information | Flag bit 1 | Flag bit 2 | Flag bit 3 | Flag bit 4 | Flag bit 5 |
|---|---|---|---|---|---|
| Value | 1 | 1 | 1 | 1 | 0 |

For example, the server performs reprojection, validity check, weighted averaging, hole filling, and intra-frame noise reduction on the reconstructed image based on the first intermediate rendering result, to generate the virtual reference block.

In a possible implementation, reprojection may be performed on the reconstructed image based on the first intermediate rendering result.

For example, a pixel of a to-be-generated virtual reference block may be reprojected in the reconstructed image based on the first intermediate rendering result. According to the depth information and the camera parameter in the first intermediate rendering result.

For example, the pixel of the to-be-generated virtual reference block may be reprojected in the reconstructed image based on depth information and a camera parameter in the first intermediate rendering result.

For another example, the pixel of the to-be-generated virtual reference block may be reprojected in the reconstructed image based on motion vector (motion vector, MV) information in the first intermediate rendering result.

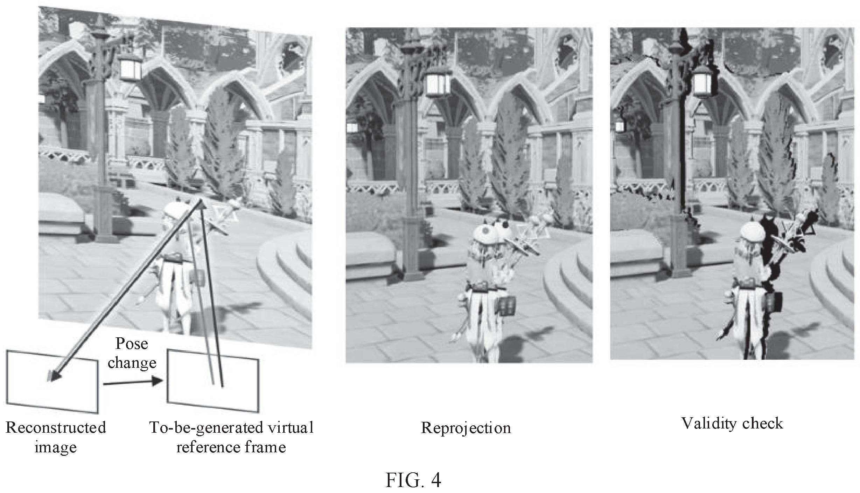

As shown in FIG. 4, in a possible implementation, the server may perform validity check on the reprojection pixel in the reconstructed image based on the first intermediate rendering result, to obtain a validity check result, where the validity check result indicates whether a to-be-detected pixel of the to-be-generated virtual reference block passes validity check, and the validity check result is used to generate the virtual reference block.

For example, the reprojection pixel is inversely reprojected into the to-be-generated virtual reference block based on the first intermediate rendering result, to obtain inverse reprojection pixel coordinates of the reprojection pixel; and the validity check result is obtained based on the inverse reprojection pixel coordinates and pixel coordinates of the to-be-detected pixel.

For example, when pixel coordinates of the reprojection pixel do not exceed a resolution range of the image, the reprojection pixel may be inversely reprojected into the to-be-generated virtual reference block, and a pixel coordinate error of the to-be-detected pixel is determined based on the inverse reprojection pixel coordinates and the pixel coordinates of the to-be-detected pixel.

When the pixel coordinate error of the to-be-detected pixel is less than an error threshold, it is determined that the to-be-detected pixel passes validity check.

When the pixel coordinate error of the to-be-detected pixel is greater than the error threshold, it is determined that the to-be-detected pixel fails to pass validity check.

When the pixel coordinate error of the to-be-detected pixel is equal to the error threshold, it may be determined that the to-be-detected pixel passes validity check, or it may be determined that the to-be-detected pixel fails to pass validity check. This is not limited in embodiments of this application.

For another example, when the pixel coordinates of the reprojection pixel exceed the resolution range of the image, it may be determined that the to-be-detected pixel fails to pass validity check.

A manner of determining the pixel coordinate error may be any manner that can be figured out by a person skilled in the art. This is not limited in embodiments of this application. For example, the pixel coordinate error may be obtained through calculation in a manner like a Euclidean distance, a Manhattan distance, or a variance.

A manner of obtaining the error threshold may be any manner that can be figured out by a person skilled in the art. This is not limited in embodiments of this application. For example, the error threshold may be obtained from outside a codec or from the bitstream. The error threshold is also referred to as a validity check error threshold (Threshold) parameter.

For another example, the reprojection pixel and the to-be-detected pixel may be projected into a world coordinate system based on the first intermediate rendering result, to obtain world coordinates of the reprojection pixel and world coordinates of the to-be-detected pixel; and the validity check result is obtained based on the world coordinates of the reprojection pixel and the world coordinates of the to-be-detected pixel.

For example, when the pixel coordinates of the reprojection pixel do not exceed the resolution range of the image, the reprojection pixel and the to-be-detected pixel may be projected into the world coordinate system, and a world coordinate error of the to-be-detected pixel may be determined based on the world coordinates of the reprojection pixel and the world coordinates of the to-be-detected pixel.

When the world coordinate error of the to-be-detected pixel is less than an error threshold, it is determined that the to-be-detected pixel passes validity check.

When the world coordinate error of the to-be-detected pixel is greater than the error threshold, it is determined that the to-be-detected pixel fails to pass validity check.

When the world coordinate error of the to-be-detected pixel is equal to the error threshold, it may be determined that the to-be-detected pixel passes validity check.

For another example, when the pixel coordinates of the reprojection pixel exceed the resolution range of the image, it may be determined that the to-be-detected pixel passes validity check, or it may be determined that the to-be-detected pixel fails to pass validity check. This is not limited in embodiments of this application.

A manner of determining the world coordinate error may be any manner that can be figured out by a person skilled in the art. This is not limited in embodiments of this application. For example, the world coordinate error may be obtained through calculation in a manner like a Euclidean distance, a Manhattan distance, or a variance.

For another example, the validity check result may be obtained based on the first intermediate rendering result, target information corresponding to the reprojection pixel, and target information of the to-be-detected pixel, where the target information includes at least one of an object identifier (Object ID), a mesh identifier (Mesh ID), or a material identifier (Material ID).

For example, when the pixel coordinates of the reprojection pixel do not exceed the resolution range of the image, pixel target information that is indicated by the reprojection pixel and that is of an object in the three-dimensional scene (for example, a game) may be determined.

When target information indicated by the to-be-detected pixel is consistent with the target information indicated by the reprojection pixel, it is determined that the to-be-detected pixel passes validity check.

For example, when object IDs indicated by the to-be-detected pixel and the reprojection pixel are both 357, it is determined that the to-be-detected pixel passes validity check.

When the target information indicated by the to-be-detected pixel is inconsistent with the target information indicated by the reprojection pixel, it is determined that the to-be-detected pixel fails to pass validity check.

For example, when a material ID indicated by the to-be-detected pixel is 122 and a material ID indicated by the reprojection pixel is 155, it is determined that the to-be-detected pixel fails to pass validity check.

For another example, when the pixel coordinates of the reprojection pixel exceed the resolution range of the image, it may be determined that the to-be-detected pixel fails to pass validity check.

In a possible implementation, one or more types of validity check may be selected from the foregoing validity check based on the second indication information, to perform validity check on the to-be-detected pixel.

In a possible implementation, a parameter related to validity check may be determined based on the third indication information.

In a possible implementation, the to-be-detected pixel that fails to pass validity check may be further marked as a hole pixel.

In a possible implementation, weighted averaging may be further performed on a mark of the to-be-detected pixel that passes validity check.

In a possible implementation, the server may perform weighted averaging on the reconstructed image based on the first intermediate rendering result, to obtain a weighted averaging result, where the weighted averaging result indicates a weighted averaged pixel value of the to-be-generated virtual reference block, and the weighted averaging result is used to generate the virtual reference block.

For example, weighted averaging is performed based on the first intermediate rendering result, a pixel value of a pixel in the reconstructed image, and an image sequence number of the reconstructed image, to obtain the weighted averaging result.

For example, in the weighted averaging process, a larger weight may be allocated to a value of a reprojection pixel in a reconstructed image whose image sequence number is closer to the to-be-generated virtual reference block, and a smaller weight may be allocated to a value of a reprojection pixel in a reconstructed image whose image sequence number is farther from the to-be-generated virtual reference block.

For another example, weighted averaging may be performed based on the first intermediate rendering result, the pixel value of the pixel in the reconstructed image, world coordinates of the pixel in the reconstructed image, and world coordinates of a pixel in the to-be-generated virtual reference block, to obtain the weighted averaging result.

For example, in the weighted averaging process, a larger weight may be allocated to a value of a reprojection pixel with a smaller world coordinate error from a to-be-weighted-averaged pixel, and a smaller weight may be allocated to a value of a reprojection pixel with a larger world coordinate error from the to-be-weighted-averaged pixel.

For another example, weighted averaging is performed based on the first intermediate rendering result, the pixel value of the pixel in the reconstructed image, pixel coordinates of the pixel in the reconstructed image, and pixel coordinates of a pixel in the to-be-generated virtual reference block, to obtain the weighted averaging result.

For example, the reprojection pixel in the reconstructed image may be inversely reprojected into the to-be-generated virtual reference block to obtain inverse reprojection pixel coordinates of the reprojection pixel, and then a pixel coordinate error between pixel coordinates of a to-be-weighted-averaged pixel and the inverse reprojection pixel coordinates is obtained through calculation. In the weighted averaging process, a larger weight is allocated to a value of a reprojection pixel with a smaller pixel coordinate error from the to-be-weighted-averaged pixel, and a smaller weight is allocated to a value of a reprojection pixel with a larger pixel coordinate error from the to-be-weighted-averaged pixel.

In a possible implementation, one or more weighted averaging methods may be selected from the foregoing weighted averaging methods based on the second indication information or a preset parameter, to perform weighted averaging on the to-be-weighted-averaged pixel.

In a possible implementation, a parameter related to the weighted averaging method may be determined based on the third indication information or the preset parameter.

In a possible implementation, the to-be-weighted-averaged pixel may be a pixel that passes validity check in the to-be-generated virtual reference block.

In a possible implementation, the server may perform hole filling on the reconstructed image based on the first intermediate rendering result, to obtain a hole filling result, where the hole filling result indicates a pixel value of a to-be-filled pixel after hole filling, the to-be-filled pixel is a pixel that fails to pass validity check in the to-be-generated virtual reference block, and the hole filling result is used to generate the virtual reference block.

For example, hole filling may be performed on the reconstructed image based on the first intermediate rendering result and the reprojection pixel in the reconstructed image, to obtain the hole filling result.

For example, the to-be-filled pixel may be separately projected into a plurality of reconstructed images to obtain a plurality of reprojection pixels, validity check is performed on the plurality of reprojection pixels based on the to-be-filled pixel, and hole filling is performed on the to-be-filled pixel based on a pixel value of a reprojection pixel that passes validity check in the plurality of reprojection pixels.

For example, weighted calculation is performed based on the pixel value of the reprojection pixel that passes validity check, to obtain a pixel value of the to-be-filled pixel after hole filling.

A quantity of projected reconstructed images in the hole filling step may be greater than a quantity of projected reconstructed images in the reprojection step. For example, if the quantity of frames of projected reconstructed images in the reprojection step is three, the quantity of frames of projected reconstructed images in the hole filling step may be greater than three.

For another example, hole filling may be performed on the reconstructed image based on the first intermediate rendering result and a target pixel of the reprojection pixel in the reconstructed image, to obtain the hole filling result, where the target pixel is a pixel whose distance from the reprojection pixel is less than a first threshold in the reconstructed image.

For example, the to-be-filled pixel may be separately reprojected into the reconstructed image to obtain the reprojection pixel, next, validity check is performed on the target pixel (namely, the pixel whose distance from the reprojection pixel is less than the first threshold) of the reprojection pixel based on the to-be-filled pixel, and then hole filling is performed on the to-be-filled pixel based on a pixel value of a pixel that passes validity check in the target pixel.

That is, hole filling may be performed on the to-be-filled pixel based on a pixel value of a pixel around the reprojection pixel that is of the to-be-filled pixel and that is in the reconstructed image.

For another example, hole filling may be performed on the reconstructed image based on the first intermediate rendering result and a non-to-be-filled pixel, to obtain the hole filling result, where the non-to-be-filled pixel is a pixel that passes validity check in the to-be-generated virtual reference block.

For example, a non-to-be-filled pixel whose distance from the to-be-filled pixel is less than a second threshold may be determined from the to-be-generated virtual reference block, and then hole filling may be performed on the to-be-filled pixel based on a pixel value of the non-to-be-filled pixel whose distance from the to-be-filled pixel is less than the second threshold.

That is, hole filling may be performed on the to-be-filled pixel based on a pixel value of a pixel that passes validity check and that is around the to-be-filled pixel in the generated virtual reference block.

In a possible implementation, one or more hole filling methods may be selected from the hole filling methods based on the second indication information or a preset parameter, to perform hole filling on the to-be-filled pixel.

In a possible implementation, a parameter related to the hole filling method may be determined based on the third indication information or the preset parameter.

S303: The server predicts the rendered image based on the virtual reference block, to obtain a predicted image.

S304: The server encodes a residual image between the predicted image and the rendered image to obtain the bitstream.

According to the method provided in embodiments of this application, the virtual reference block may be generated based on an intermediate rendering result generated in the rendering process through reprojection, validity check, weighted averaging, hole filling, intra-frame noise reduction, or in another manner. The generated virtual reference block may provide a more accurate reference for encoding and decoding of the rendered image, thereby improving inter prediction accuracy, and further improving encoding efficiency and reducing a bit rate. In this way, the total device-cloud bit rate can be reduced while ensuring rendering of an image on the device side.

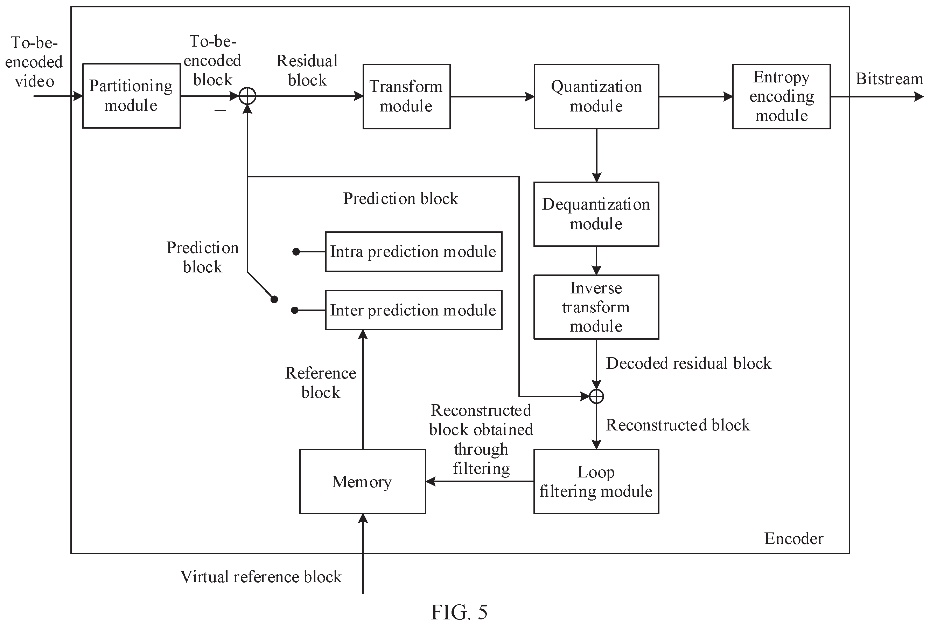

FIG. 5 is a diagram of an encoding framework according to an embodiment of this application. An encoding framework of the encoder in FIG. 2 is shown in embodiments of FIG. 5. A to-be-encoded video in FIG. 5 is a rendered video, and may include a plurality of frames of rendered images.

As shown in FIG. 5, for example, the encoder may include a partitioning module, an intra prediction module, an inter prediction module, a transform module, a quantization module, an entropy encoding module, a dequantization module, an inverse transform module, a loop filtering module, and a memory.

For example, after generating a virtual reference block, a rendering module may insert the virtual reference block into a reference frame list of the memory, and increase a length of the reference frame list by 1.

Still as shown in FIG. 5, an encoding process of the encoder may be as follows: After obtaining the to-be-encoded video, the partitioning module of the encoder may partition each frame of rendered image in the to-be-encoded video, to obtain a to-be-encoded block. For each to-be-encoded block, a decision module (not shown in FIG. 5) may determine whether to perform inter prediction or intra prediction on the to-be-encoded block.

When intra prediction is determined, the intra prediction module may perform intra prediction, to determine a predicted block corresponding to the to-be-encoded block. After the predicted block is obtained, a residual block between the to-be-encoded block and the predicted block may be determined. Then, the residual block is input into the transform module, and the transform module transforms the residual block, to obtain a transform result and output the transform result to the quantization module. Then, the quantization module may quantize the transform result, to obtain a quantization result, and output the quantization result to the entropy encoding module. Then, the entropy encoding module may perform entropy encoding on the quantization result, to obtain encoded data of the residual block, and write the encoded data of the residual block into a bitstream.

For example, the quantization module may further output the quantization result to the dequantization module, and the dequantization module performs dequantization, to obtain a dequantization result, and output the dequantization result to the inverse transform module. Next, the inverse transform module performs inverse transform on the dequantization result, to obtain a decoded residual block. Then, the decoded residual block may be superimposed with the predicted block output by the intra prediction module, to obtain a reconstructed block. Subsequently, the reconstructed block is input into the loop filtering module, and the loop filtering module performs loop filtering on the reconstructed block, to obtain a reconstructed block obtained through filtering and output the reconstructed block obtained through filtering to the memory. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the memory for storage.)

When inter prediction is determined, the inter prediction module may perform inter prediction, to determine a predicted block corresponding to the to-be-encoded block.

In a possible manner, the inter prediction module may select the virtual reference block from a reference frame sequence in the memory as a reference frame of the rendered image. For a to-be-encoded block in the rendered image, a matched predicted block (namely, the foregoing predicted image) may be searched for from the virtual reference block.

In a possible manner, the inter prediction module may use both the virtual reference block and an original reference frame in the reference frame sequence in the memory as candidate reference frames of the rendered image. The original reference frame is a reconstructed image. For a to-be-encoded block in the rendered image, inter prediction may be performed based on a plurality of candidate reference frames, to determine a plurality of predicted blocks. One predicted block is correspondingly determined for one candidate reference frame. One optimal predicted block may be selected from the plurality of predicted blocks (for example, a predicted block with a minimum rate-distortion cost may be determined as the optimal predicted block (namely, the foregoing predicted image) by using the rate-distortion cost as an evaluation standard).

After the predicted block is obtained, a residual block (namely, the foregoing residual image) between the to-be-encoded block and the predicted block may be determined. Then, the residual block is input into the transform module, and the transform module transforms the residual block, to obtain a transform result and output the transform result to the quantization module. Then, the quantization module may quantize the transform result, to obtain a quantization result, and output the quantization result to the entropy encoding module. Then, the entropy encoding module may perform entropy encoding on the quantization result, to obtain encoded data of the residual block, and write the encoded data of the residual block into a bitstream (namely, the bitstream obtained in S305).

For example, the quantization module may further output the quantization result to the dequantization module, and the dequantization module performs dequantization, to obtain a dequantization result, and output the dequantization result to the inverse transform module. Next, the inverse transform module performs inverse transform on the dequantization result, to obtain a decoded residual block. Then, the decoded residual block may be superimposed with the predicted block output by the intra prediction module, to obtain a reconstructed block. Subsequently, the reconstructed block is input into the loop filtering module, and the loop filtering module performs loop filtering on the reconstructed block, to obtain a reconstructed block obtained through filtering and output the reconstructed block obtained through filtering to the memory. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the memory for storage.)

For example, after the rendered image is encoded, the virtual reference block in the reference frame list in the memory may be deleted, and the length of the reference frame list is decreased by 1, to avoid a too long reference frame list and reduce encoding efficiency.

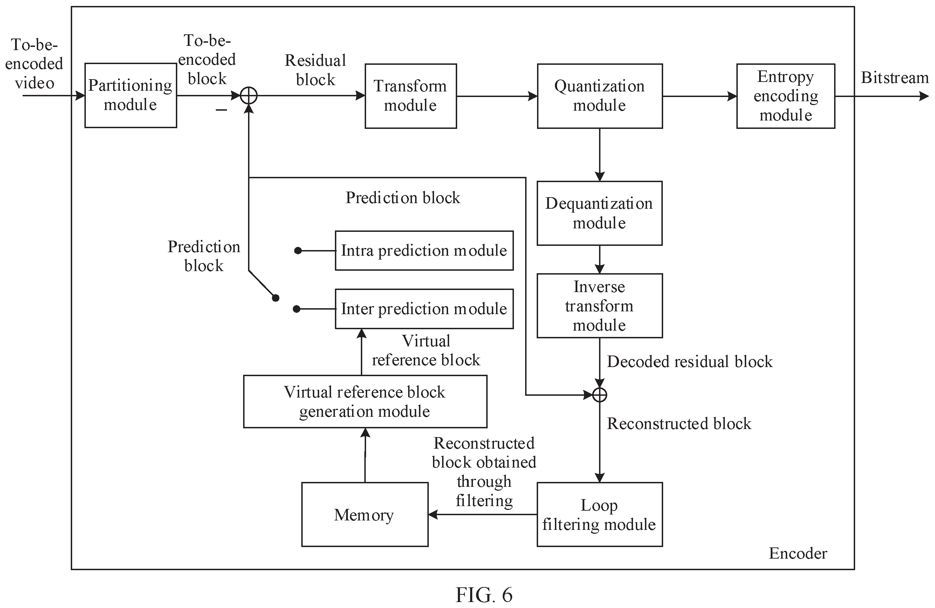

Refer to FIG. 6. For example, the encoder may further include a virtual reference block generation module.

The virtual reference block generation module is configured to generate a virtual reference block, and send the generated virtual reference block to the inter prediction module (a motion estimation module and a motion compensation module in the inter prediction module) for subsequent video encoding.

In a possible implementation, the virtual reference block generation module may also be integrated with another module in the encoder.

For example, the virtual reference block generation module may be integrated into the inter prediction module.

For a specific manner in which the virtual reference block generation module generates the virtual reference block, refer to step S303. Details are not described herein again.

It may be understood that the virtual reference block generation module for generating the virtual reference block is placed in a codec, so that a speed of generating the virtual reference block is improved while a total device-cloud bit rate is reduced on some devices implementing the codec by using a hardware circuit.

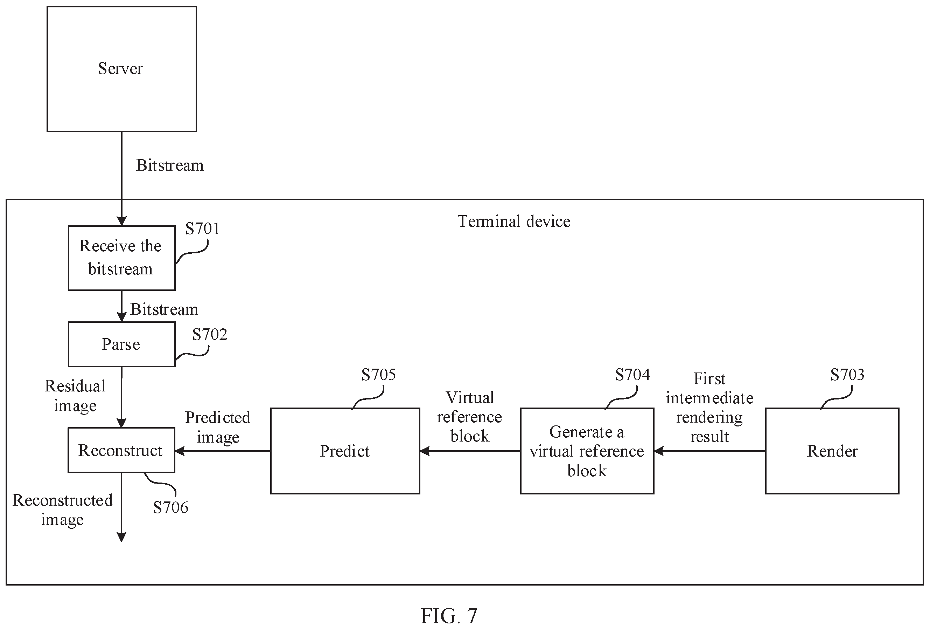

FIG. 7 is a diagram of a decoding process according to an embodiment of this application. FIG. 7 shows a decoding process corresponding to FIG. 3. In embodiments of FIG. 7, a terminal device performs rendering based on a locally generated rendering parameter, and generates a first intermediate rendering result. In embodiments of FIG. 7, an example in which one frame of image is decoded is used for description.

S701: The terminal device receives a bitstream.

For example, the terminal device may receive the bitstream after a server sends the bitstream.

In a possible implementation, device-side device information may be sent to a cloud-side device.

In a possible implementation, indication information from the cloud-side device is received, where the indication information includes first indication information, and when the first indication information is a first value, the indication information further includes second indication information; and/or when the second indication information is a second value, the indication information further includes third indication information.

S702: The terminal device decodes the bitstream to obtain a residual image of a current image.

In a possible implementation, the bitstream may be decoded to obtain the residual image of the current image; and the bitstream is decoded to obtain the indication information, where the indication information includes the first indication information, and when the first indication information is the first value, the indication information further includes the second indication information; and/or when the second indication information is the second value, the indication information further includes the third indication information.

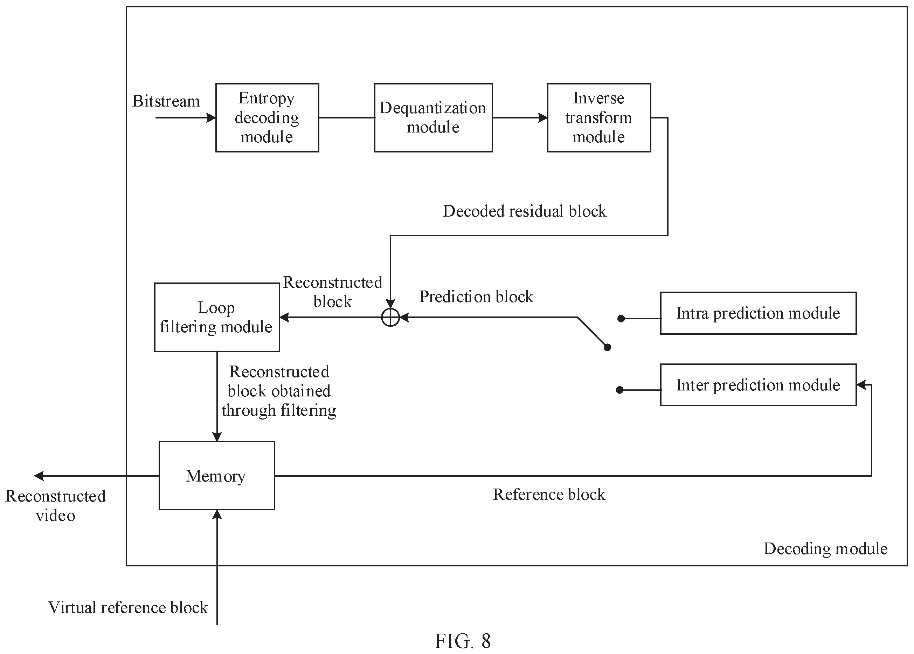

FIG. 8 is a diagram of a decoding framework according to an embodiment of this application. A decoding framework of the decoder in FIG. 2 is shown in embodiments of FIG. 8.

As shown in FIG. 8, for example, the decoder may include an entropy decoding module, a dequantization module, an inverse transform module, an intra prediction module, an inter prediction module, a loop filtering module, and a memory.

For example, after receiving the bitstream, the terminal device may parse the bitstream, to obtain a parsing result. The parsing process may be as follows: Encoded data of a residual block is extracted from the bitstream, and then the encoded data of the residual block is input into the entropy decoding module. The entropy decoding module performs entropy decoding on the encoded data of the residual block, to obtain entropy decoded data. Next, the entropy decoded data may be input into the dequantization module, and the dequantization module performs dequantization, to obtain dequantized data, and input the dequantized data into the inverse transform module. Then, the inverse transform module performs inverse transform on the dequantized data, to obtain a decoded residual block (namely, the residual image corresponding to the current frame in S702).

It should be understood that, when an encoder side performs lossy encoding on the residual block, a residual block obtained by a decoder side through parsing is different from the residual block encoded by the encoder side. When the encoder side performs lossless encoding on the residual block, the residual block obtained by the decoder side through parsing is the same as the residual block encoded by the encoder side.

It should be noted that bitstream description information used to describe the bitstream may be further extracted from the bitstream. In this case, operations such as entropy decoding, dequantization, and inverse transform do not need to be performed on the bitstream description information. The bitstream description information may be used for a subsequent decoding process.

S703: The terminal device performs rendering on a three-dimensional scene to obtain a rendered image.

An intermediate rendering result is generated in the rendering process, and the intermediate rendering result includes a first intermediate rendering result.

In a possible implementation, the first intermediate rendering result is determined based on a target operation.

In a possible implementation, the terminal device may perform rendering on the three-dimensional scene based on a rendering parameter corresponding to the current frame, and generate the first intermediate rendering result in the rendering process. The rendering parameter includes a first rendering parameter generated by the terminal device.

For example, after the residual image corresponding to the current frame is obtained through parsing, a rendering module (which may be a graphics rendering engine included in the rendering module) may perform rendering on the three-dimensional scene based on the rendering parameter corresponding to the current frame.

For example, when the first rendering parameter uploaded by the terminal device to the server is all parameters required for rendering by the graphics rendering engine, the rendering module may perform rendering on the three-dimensional scene based on the first rendering parameter corresponding to the current frame. When the first rendering parameter uploaded by the terminal device is some parameters required for rendering by the graphics rendering engine, the terminal device may further generate a fifth rendering parameter, and then the rendering module may perform rendering on the three-dimensional scene based on the first rendering parameter corresponding to the current frame and the fifth rendering parameter.

It should be noted that a type of a parameter included in the fifth rendering parameter generated by the terminal device is the same as a type of a parameter included in a second rendering parameter generated by the central server; and precision of the parameter included in the fifth rendering parameter is less than or equal to precision of the parameter included in the second rendering parameter.

It should be noted that a type of an intermediate result included in the first intermediate rendering result generated by the terminal device is the same as a type of an intermediate result included in a first intermediate rendering result generated by the server; and precision of the intermediate result included in the first intermediate rendering result generated by the terminal device is less than or equal to precision of the intermediate result included in the first intermediate rendering result generated by the server.

It should be noted that a rendered image can still be obtained when the graphics rendering engine of the terminal device performs rendering. Because computational power of the terminal device is lower than computational power of the server, image quality (the image quality may include subjective quality and objective quality (the objective quality is, for example, rate-distortion performance or a PSNR (Peak Signal to Noise Ratio, peak signal to noise ratio))) of the rendered image obtained by performing rendering by the graphics rendering engine of the terminal device is lower than image quality of a rendered image obtained by performing rendering by a graphics rendering engine of the server. Therefore, the terminal device may not display the rendered image obtained by performing rendering by the graphics rendering engine of the terminal device, but display a reconstructed image obtained by decoding the bitstream.

S704. Perform a target operation on the reconstructed image based on the first intermediate rendering result, to generate a virtual reference block.

The target operation includes at least one of reprojection, validity check, weighted averaging, hole filling, or intra-frame noise reduction.

In a possible implementation, validity check may be performed on a reprojection pixel in the reconstructed image based on the first intermediate rendering result, to obtain a validity check result, where the validity check result indicates whether a to-be-detected pixel of a to-be-generated virtual reference block passes validity check, and the validity check result is used to generate the virtual reference block.

In a possible implementation, the reprojection pixel may be inversely reprojected into the to-be-generated virtual reference block based on the first intermediate rendering result, to obtain inverse reprojection pixel coordinates of the reprojection pixel; and the validity check result is obtained based on the inverse reprojection pixel coordinates and pixel coordinates of the to-be-detected pixel.

In a possible implementation, the reprojection pixel and the to-be-detected pixel may be projected into a world coordinate system based on the first intermediate rendering result, to obtain world coordinates of the reprojection pixel and world coordinates of the to-be-detected pixel; and the validity check result is obtained based on the world coordinates of the reprojection pixel and the world coordinates of the to-be-detected pixel.

In a possible implementation, the validity check result may be obtained based on the first intermediate rendering result, target information corresponding to the reprojection pixel, and target information of the to-be-detected pixel, where the target information includes at least one of an object identifier (Object ID), a mesh identifier (Mesh ID), or a material identifier (Material ID).

In a possible implementation, weighted averaging may be performed on the reconstructed image based on the first intermediate rendering result, to obtain a weighted averaging result, where the weighted averaging result indicates a weighted averaged pixel value of the to-be-generated virtual reference block, and the weighted averaging result is used to generate the virtual reference block.

In a possible implementation, weighted averaging may be performed based on the first intermediate rendering result, a pixel value of a pixel in the reconstructed image, and an image sequence number of the reconstructed image, to obtain the weighted averaging result.

In a possible implementation, weighted averaging may be performed based on the first intermediate rendering result, the pixel value of the pixel in the reconstructed image, world coordinates of the pixel in the reconstructed image, and world coordinates of a pixel in the to-be-generated virtual reference block, to obtain the weighted averaging result.

In a possible implementation, weighted averaging may be performed based on the first intermediate rendering result, the pixel value of the pixel in the reconstructed image, pixel coordinates of the pixel in the reconstructed image, and pixel coordinates of the pixel in the to-be-generated virtual reference block, to obtain the weighted averaging result.

In a possible implementation, hole filling may be performed on the reconstructed image based on the first intermediate rendering result, to obtain a hole filling result, where the hole filling result indicates a pixel value of a to-be-filled pixel after hole filling, the to-be-filled pixel is a pixel that fails to pass validity check in the to-be-generated virtual reference block, and the hole filling result is used to generate the virtual reference block.

In a possible implementation, hole filling may be performed on the reconstructed image based on the first intermediate rendering result and the reprojection pixel in the reconstructed image, to obtain the hole filling result.

In a possible implementation, hole filling may be performed on the reconstructed image based on the first intermediate rendering result and a target pixel of the reprojection pixel in the reconstructed image, to obtain the hole filling result, where the target pixel is a pixel whose distance from the reprojection pixel is less than a first threshold in the reconstructed image.

In a possible implementation, hole filling may be performed on the reconstructed image based on the first intermediate rendering result and a non-to-be-filled pixel, to obtain the hole filling result, where the non-to-be-filled pixel is a pixel that passes validity check in the to-be-generated virtual reference block.

For example, after generating the virtual reference block, the terminal device may reconstruct the residual image corresponding to the current frame based on the virtual reference block, to obtain the reconstructed image. Image quality of the reconstructed image is higher than that of the rendered image obtained by performing rendering by the graphics rendering engine of the terminal device. Subsequently, the terminal device may display the reconstructed image.

It should be noted that S701 to S703 may be performed by the rendering module in the terminal device, and S704 may be performed by the rendering module in the terminal device, or may be performed by a module in the terminal device other than the modules shown in FIG. 2 (in this application, an example in which the rendering module performs S704 is used for description). S705 and S706 may be performed by the decoder in FIG. 2.

S705: The terminal device predicts the current frame based on the virtual reference block, to obtain a predicted image.

S706: The terminal device performs reconstruction based on the predicted image and the residual image, to obtain a reconstructed image of the current frame.

As shown in FIG. 8 again, for example, after generating the virtual reference block, the rendering module may insert the virtual reference block into a reference frame list of the memory, and increase a length of the reference frame list by 1.

As shown in FIG. 8 again, for example, when intra prediction is determined based on the bitstream description information obtained from the bitstream through parsing, the intra prediction module may perform intra prediction, to obtain a predicted block. Then, the decoded residual block may be superimposed with the predicted block, to obtain a reconstructed block. Then, loop filtering may be performed on the reconstructed block, to obtain a reconstructed block obtained through filtering and output the reconstructed block obtained through filtering to the memory. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the memory for storage.)

As shown in FIG. 8 again, for example, when inter prediction is determined based on the bitstream description information obtained from the bitstream through parsing, the inter prediction module may perform inter prediction, to obtain a predicted block (namely, the predicted image in S705).

In a possible manner, when the inter prediction module determines, based on the bitstream description information obtained from the bitstream through parsing, that a reference frame is a virtual reference block, the inter prediction module may select a corresponding virtual reference block from a reference frame sequence in the memory as a reference frame; and then, may determine the predicted block based on the virtual reference block.

In a possible manner, when the inter prediction module determines, based on the bitstream description information obtained from the bitstream through parsing, that a reference frame is an original reference frame, the inter prediction module may select a corresponding original reference frame from a reference frame sequence in the memory as a reference frame; and then, may determine the predicted block based on the original reference frame.

After the predicted block is obtained, the decoded residual block may be superimposed with the predicted block, to obtain a reconstructed block. Then, loop filtering may be performed on the reconstructed block, to obtain a reconstructed block obtained through filtering and output the reconstructed block obtained through filtering to the memory. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the memory.)

It should be understood that the terminal device may further generate the bitstream based on the first rendering parameter, and then send the bitstream to the server based on a preset periodicity. In this way, the server may obtain the first rendering parameter. In addition, because a data amount of the first rendering parameter is small, the terminal device may encode the first rendering parameter, write encoded data of the first rendering parameter into the bitstream, and then send the bitstream to the server. Alternatively, the terminal device may not encode the first rendering parameter, but directly write the first rendering parameter into the bitstream, and send the bitstream to the server. This is not limited in this application.

In this way, in this application, all rendering is performed by the terminal device, and further, the server may not send an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

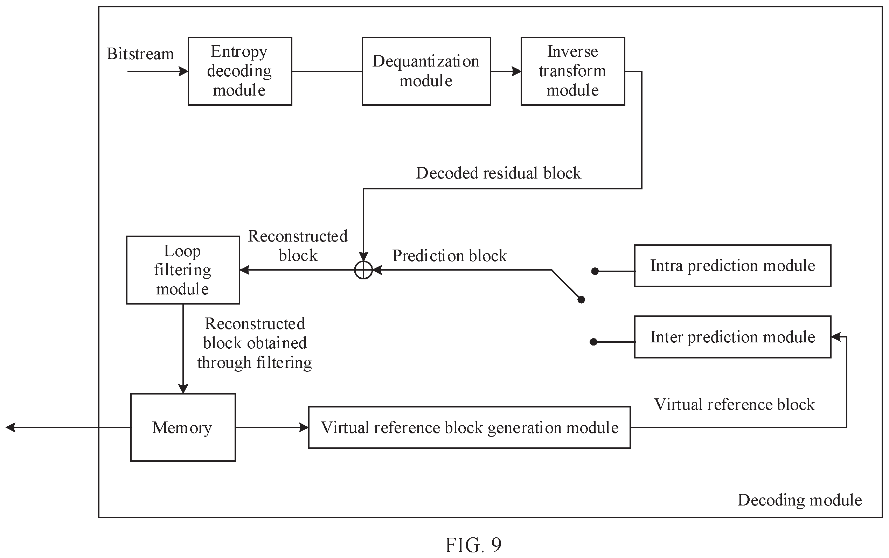

Refer to FIG. 9. For example, the decoder may further include a virtual reference block generation module.

The virtual reference block generation module is configured to generate a virtual reference block, and send the generated virtual reference block to the inter prediction module (a motion estimation module and a motion compensation module in the inter prediction module) for subsequent video encoding.

In a possible implementation, the virtual reference block generation module may also be integrated with another module in the decoder.

For example, the virtual reference block generation module may be integrated into the inter prediction module.

For a specific manner in which the virtual reference block generation module generates the virtual reference block, refer to step S704. Details are not described herein again.

It may be understood that the virtual reference block generation module for generating the virtual reference block is placed in a codec, so that a speed of generating the virtual reference block is improved while a total device-cloud bit rate is reduced on some devices implementing the codec by using a hardware circuit.

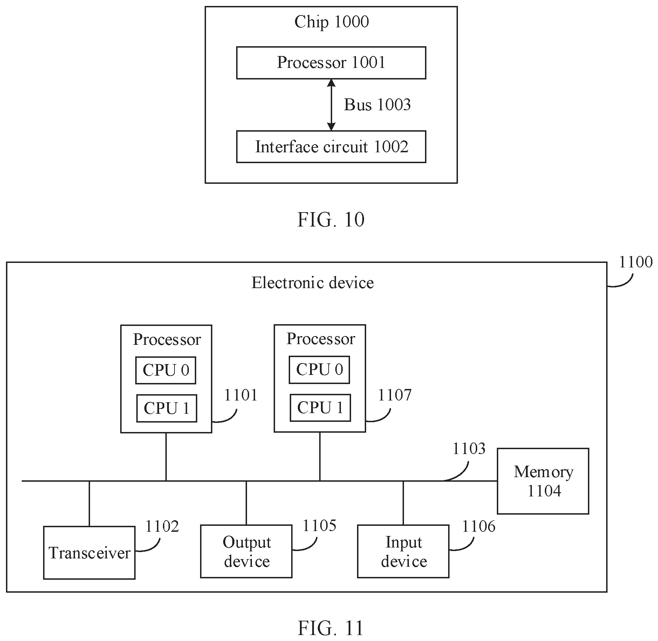

An embodiment of this application further provides a chip. The chip may be a chip of the cloud-side device or a chip of the device-side device. FIG. 10 is a diagram of a structure of a chip 1000. The chip 1000 includes one or more processors 1001 and an interface circuit 1002. Optionally, the chip 1000 may further include a bus 1003.

The processor 1001 may be an integrated circuit chip and has a signal processing capability. In an implementation process, steps in the encoding and decoding method can be implemented by using a hardware integrated logic circuit in the processor 1001, or by using instructions in a form of software.

Optionally, the processor 1001 may be a general-purpose processor, a digital signal processor (digital signal processor, DSP), an integrated circuit (application-specific integrated circuit, ASIC), a field-programmable gate array (field-programmable gate array, FPGA) or another programmable logic device, a discrete gate or a transistor logic device, or a discrete hardware component. The processor 1001 may implement or perform the methods and steps that are disclosed in embodiments of this application. The general-purpose processor may be a microprocessor, or the processor may be any conventional processor or the like.

The interface circuit 1002 may be configured to send or receive data, instructions, or information. The processor 1001 may process data, instructions, or other information received by the interface circuit 1002, and send processed information through the interface circuit 1002.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in an electronic device in embodiments of this application. Optionally, the interface circuit 1002 may be configured to output an execution result of the processor 1001. For the encoding and decoding method provided in one or more of embodiments of this application, refer to the foregoing embodiments. Details are not described herein again.

It should be noted that functions respectively corresponding to the processor 1001 and the interface circuit 1002 may be implemented by using a hardware design, may be implemented by using a software design, or may be implemented in a combination of software and hardware. This is not limited herein.

FIG. 11 is a diagram of a structure of an electronic device according to an embodiment of this application. The electronic device may be the cloud-side device, a processor of the cloud-side device, a chip in a processor of the cloud-side device, or a functional module of the cloud-side device. Alternatively, the electronic device may be the device-side device, a processor of the device-side device, a chip in a processor of the device-side device, or a functional module of the device-side device. As shown in FIG. 11, the electronic device 1100 includes a processor 1101, a transceiver 1102, and a communication line 1103.

The processor 1101 is configured to perform any step in the encoding and decoding method provided in embodiments of this application, and in the process of performing any step in the encoding and decoding method provided in embodiments of this application, the processor 1101 may choose to invoke the transceiver 1102 and the communication line 1103 to complete a corresponding operation.

Further, the electronic device 1100 may further include a memory 1104. The processor 1101, the memory 1104, and the transceiver 1102 may be connected to each other through the communication line 1103.

The processor 1101 is a processor, a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1101 may be another apparatus with a processing function, for example, a circuit, a component, or a software module. This is not limited.

The transceiver 1102 is configured to communicate with another device or another communication network. The another communication network may be an Ethernet, a radio access network (radio access network, RAN), a wireless local area network (wireless local area network, WLAN), or the like. The transceiver 1102 may be a module, a circuit, a transceiver, or any apparatus that can implement communication.

The transceiver 1102 is mainly configured to receive and send commands, information, and the like, and may include a transmitter and a receiver that separately send and receive the commands, the information, and the like. An operation other than receiving and sending the commands, the information, and the like is implemented by the processor.

The communication line 1103 is configured to transmit information between components included in the electronic device 1100.

In a design, the processor may be considered as a logic circuit, and the transceiver may be considered as an interface circuit.

The memory 1104 is configured to store instructions. The instructions may be computer programs.

The memory 1104 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 1104 may alternatively be a compact disc read-only memory (compact disc read-only memory, CD-ROM) or another compact disc storage, an optical disk storage (including a compact disc, a laser disc, an optical disc, a digital versatile disc, a Blu-ray disc, and the like), a magnetic disk storage medium, another magnetic storage device, or the like. It should be noted that the memory of the systems and methods described in this specification includes but is not limited to these memories and any memory of another appropriate type.

It should be noted that the memory 1104 may be independent of the processor 1101, or may be integrated with the processor 1101. The memory 1104 may be configured to store instructions, program code, some data, or the like. The memory 1104 may be located inside or outside the electronic device 1100. This is not limited. The processor 1101 is configured to execute the instructions stored in the memory 1104, to implement the method provided in the foregoing embodiments of this application.

In an example, the processor 1101 may include one or more processors, for example, a processor 0 and a processor 1 in FIG. 11.

In an optional implementation, the electronic device 1100 includes a plurality of processors. For example, in addition to the processor 1101 in FIG. 11, the electronic device 1100 may include a processor 1107.

In an optional implementation, the electronic device 1100 further includes an output device 1105 and an input device 1106. For example, the input device 1106 is a device, for example, a keyboard, a mouse, a microphone, or a joystick, and the output device 1105 is a device, for example, a display or a speaker (speaker).

It should be noted that the electronic device 1100 may be a chip system or a device having a structure similar to that in FIG. 11. The chip system may include a chip, or may include a chip and another discrete device. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited. In addition, a composition structure shown in FIG. 11 does not constitute a limitation on the electronic device 1100. In addition to the components shown in FIG. 11, the electronic device 1100 may include more or fewer components than those shown in FIG. 11, or some components may be combined, or different component arrangements may be used.

The processor and the transceiver that are described in this application may be implemented on an integrated circuit (integrated circuit, IC), an analog IC, a radio frequency integrated circuit, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

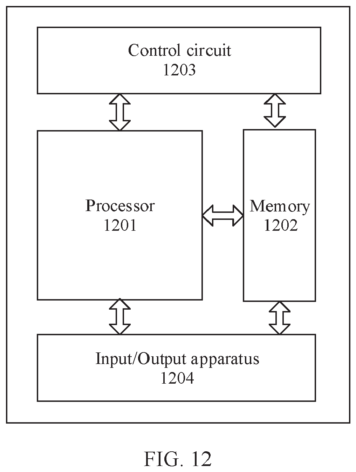

FIG. 12 is a diagram of a structure of an electronic device according to an embodiment of this application. The electronic device may be the cloud-side device, a processor of the cloud-side device, a chip in a processor of the cloud-side device, or a functional module of the cloud-side device. Alternatively, the electronic device may be the device-side device, a processor of the device-side device, a chip in a processor of the device-side device, or a functional module of the device-side device. The electronic device may be applicable to the scenario shown in the foregoing method embodiments. For ease of description, FIG. 12 shows only main components of the electronic device, including a processor 1201, a memory 1202, a control circuit 1203, and an input/output apparatus 1204. The processor 1201 is mainly configured to process a communication protocol and communication data, execute a software program, and process data of the software program. The memory 1202 is mainly configured to store the software program and data. The control circuit 1203 is mainly configured to supply power and transmit various electrical signals. The input/output apparatus 1204 is mainly configured to: receive data input by a user, and output data to the user.

When the electronic device is the processor 1201, the control circuit 1203 may be a main board. The memory 1202 includes a medium having a storage function, for example, a hard disk, a RAM, or a ROM. The processor 1201 may include a baseband processor 1201 and a central processing unit. The baseband processor is mainly configured to process the communication protocol and the communication data. The central processing unit is mainly configured to: control the entire electronic device, execute the software program, and process the data of the software program. The input/output apparatus 1204 includes a display, a keyboard, a mouse, and the like. The control circuit 1203 may further include or be connected to a transceiver circuit or a transceiver, for example, a network cable interface, configured to send or receive data or a signal, for example, perform data transmission and communication with another device. Further, the control circuit may further include an antenna, configured to receive and send a radio signal, and configured to perform data/signal transmission with another device.

An embodiment of this application further provides an encoding apparatus, including a rendering module, an encoder, and a communication module. The rendering module is configured to perform rendering on a three-dimensional scene to obtain a rendered image, where an intermediate rendering result is generated in the rendering process, and the intermediate rendering result includes a first intermediate rendering result. The rendering module is further configured to perform a target operation on a reconstructed image based on the first intermediate rendering result, to generate a virtual reference block, where the target operation includes at least one of reprojection, validity check, weighted averaging, hole filling, or intra-frame noise reduction. The encoder is configured to predict the rendered image based on the virtual reference block, to obtain a predicted image. The encoder is further configured to encode a residual image between the predicted image and the rendered image to obtain a bitstream. The communication module is configured to send the bitstream.

An embodiment of this application further provides a decoding apparatus, including a rendering module, a decoder, and a communication module. The communication module is configured to receive a bitstream. The decoder is configured to decode the bitstream to obtain a residual image of a current image. The rendering module is configured to perform rendering on a three-dimensional scene to obtain a rendered image, where an intermediate rendering result is generated in the rendering process, and the intermediate rendering result includes a first intermediate rendering result. The rendering module is further configured to perform a target operation on a reconstructed image based on the first intermediate rendering result, to generate a virtual reference block, where the target operation includes at least one of reprojection, validity check, weighted averaging, hole filling, or intra-frame noise reduction. The decoder is further configured to predict the rendered image based on the virtual reference block, to obtain a predicted image. The decoder is further configured to perform reconstruction based on the predicted image and the residual image, to obtain a reconstructed image of the current frame.

An embodiment of this application further provides a device-cloud collaboration system, including any encoding apparatus provided in embodiments of this application and any decoding apparatus provided in embodiments of this application.

An embodiment of this application provides a cloud-side device, including a memory and a processor. The memory is coupled to the processor, the memory stores program instructions, and when the program instructions are executed by the processor, the server is enabled to perform any encoding method provided in embodiments of this application.

An embodiment of this application provides a device-side device, including a memory and a processor. The memory is coupled to the processor, the memory stores program instructions, and when the program instructions are executed by the processor, the terminal device is enabled to perform any decoding method provided in embodiments of this application.

An embodiment of this application provides an encoder, including a processing circuit, configured to perform any encoding method provided in embodiments of this application.

An embodiment of this application provides a decoder, including a processing circuit, configured to perform any decoding method provided in embodiments of this application.

This application provides a bitstream generation method. In the method, a bitstream is generated based on the virtual reference block provided in embodiments of this application.

An embodiment of this application provides a bitstream storage apparatus. The apparatus includes a receiver and at least one storage medium. The receiver is configured to receive a bitstream. The at least one storage medium is configured to store the bitstream. The bitstream is generated according to any method provided in embodiments of this application.

An embodiment of this application provides a bitstream transmission apparatus. The apparatus includes a transmitter and at least one storage medium. The at least one storage medium is configured to store a bitstream. The bitstream is generated according to any method provided in embodiments of this application. The transmitter is configured to: obtain the bitstream from the storage medium, and send the bitstream to a device-side device through a transmission medium.

An embodiment of this application provides a bitstream distribution system. The system includes: at least one storage medium, configured to store at least one bitstream, where the at least one bitstream is generated according to any method provided in embodiments of this application; and a streaming media device, configured to: obtain a target bitstream from the at least one storage medium, and send the target bitstream to a device-side device. The streaming media device includes a content server or a content distribution server.

An embodiment of this application further provides an electronic device. The apparatus includes at least one processor. When the at least one processor executes program code or instructions, the foregoing related method steps are implemented to implement the encoding and decoding method in the foregoing embodiments.

Optionally, the apparatus may further include at least one memory, and the at least one memory is configured to store the program code or the instructions.

An embodiment of this application further provides a computer storage medium. The computer storage medium stores computer instructions. When the computer instructions are executed on an electronic device, the electronic device is enabled to perform the foregoing related method steps to implement the encoding and decoding method in the foregoing embodiments.

An embodiment of this application further provides a computer program product. When the computer program product is run on a computer, the computer is enabled to perform the foregoing related steps to implement the encoding and decoding method in the foregoing embodiments.

An embodiment of this application further provides an electronic device. The apparatus may be specifically a chip, an integrated circuit, a component, or a module. Specifically, the apparatus may include a memory configured to store instructions and a processor that are connected, or the apparatus includes at least one processor, configured to obtain instructions from an external memory. When the apparatus runs, the processor may execute the instructions, so that the chip performs the encoding and decoding method in the foregoing method embodiments.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An encoding method, applied to a cloud-side device, wherein the method comprises:
performing rendering on a three-dimensional scene to obtain a rendered image, wherein an intermediate rendering result is generated in the rendering process, and the intermediate rendering result comprises a first intermediate rendering result;
performing a target operation on a reconstructed image based on the first intermediate rendering result, to generate a virtual reference block, wherein the target operation comprises at least one of reprojection, validity check, weighted averaging, hole filling, or intra-frame noise reduction;
predicting the rendered image based on the virtual reference block, to obtain a predicted image; and
encoding a residual image between the predicted image and the rendered image to obtain a bitstream.

2. The method according to claim 1, wherein the method further comprises:
when a target condition is met, performing the target operation on a reconstructed image of an encoded image based on the first intermediate rendering result.

3. The method according to claim 1 or 2, wherein the bitstream comprises first indication information, and when the first indication information is a first value, the bitstream further comprises second indication information; and/or
when the second indication information is a second value, the bitstream further comprises third indication information.

4. The method according to any one of claims 1 to 3, wherein the method further comprises:
determining the first intermediate rendering result based on the target operation.

5. The method according to any one of claims 1 to 4, wherein the target operation comprises validity check, and performing the target operation on the reconstructed image based on the first intermediate rendering result, to generate the virtual reference block comprises:
performing validity check on a reprojection pixel in the reconstructed image based on the first intermediate rendering result, to obtain a validity check result, wherein the validity check result indicates whether a to-be-detected pixel of a to-be-generated virtual reference block passes validity check, and the validity check result is used to generate the virtual reference block.

6. The method according to claim 5, wherein performing validity check on the reprojection pixel in the reconstructed image based on the first intermediate rendering result, to obtain the validity check result comprises:
inversely reprojecting the reprojection pixel into the to-be-generated virtual reference block based on the first intermediate rendering result, to obtain inverse reprojection pixel coordinates of the reprojection pixel; and
obtaining the validity check result based on the inverse reprojection pixel coordinates and pixel coordinates of the to-be-detected pixel.

7. The method according to claim 5 or 6, wherein performing validity check on the reprojection pixel in the reconstructed image based on the first intermediate rendering result, to obtain the validity check result comprises:
projecting, based on the first intermediate rendering result, the reprojection pixel and the to-be-detected pixel into a world coordinate system, to obtain world coordinates of the reprojection pixel and world coordinates of the to-be-detected pixel; and
obtaining the validity check result based on the world coordinates of the reprojection pixel and the world coordinates of the to-be-detected pixel.

8. The method according to any one of claims 5 to 7, wherein performing validity check on the reprojection pixel in the reconstructed image based on the first intermediate rendering result, to obtain the validity check result comprises:
obtaining the validity check result based on the first intermediate rendering result, target information corresponding to the reprojection pixel, and target information of the to-be-detected pixel, wherein the target information comprises at least one of an object identifier (Object ID), a mesh identifier (Mesh ID), or a material identifier (Material ID).

9. The method according to any one of claims 1 to 8, wherein the target operation comprises weighted averaging, and performing the target operation on the reconstructed image based on the first intermediate rendering result, to generate the virtual reference block comprises:
performing weighted averaging on the reconstructed image based on the first intermediate rendering result, to obtain a weighted averaging result, wherein the weighted averaging result indicates a weighted averaged pixel value of the to-be-generated virtual reference block, and the weighted averaging result is used to generate the virtual reference block.

10. The method according to claim 9, wherein performing weighted averaging on the reconstructed image based on the first intermediate rendering result, to obtain the weighted averaging result comprises:
performing weighted averaging based on the first intermediate rendering result, a pixel value of a pixel in the reconstructed image, and an image sequence number of the reconstructed image, to obtain the weighted averaging result.

11. The method according to claim 9 or 10, wherein performing weighted averaging on the reconstructed image based on the first intermediate rendering result, to obtain the weighted averaging result comprises:
performing weighted averaging based on the first intermediate rendering result, the pixel value of the pixel in the reconstructed image, world coordinates of the pixel in the reconstructed image, and world coordinates of a pixel in the to-be-generated virtual reference block, to obtain the weighted averaging result.

12. The method according to any one of claims 9 to 11, wherein performing weighted averaging on the reconstructed image based on the first intermediate rendering result, to obtain the weighted averaging result comprises:
performing weighted averaging based on the first intermediate rendering result, the pixel value of the pixel in the reconstructed image, pixel coordinates of the pixel in the reconstructed image, and pixel coordinates of the pixel in the to-be-generated virtual reference block, to obtain the weighted averaging result.

13. The method according to any one of claims 1 to 12, wherein the target operation comprises hole filling, and performing the target operation on the reconstructed image based on the first intermediate rendering result, to generate the virtual reference block comprises:
performing hole filling on the reconstructed image based on the first intermediate rendering result, to obtain a hole filling result, wherein the hole filling result indicates a pixel value of a to-be-filled pixel after hole filling, the to-be-filled pixel is a pixel that fails to pass validity check in the to-be-generated virtual reference block, and the hole filling result is used to generate the virtual reference block.

14. The method according to claim 13, wherein performing hole filling on the reconstructed image based on the first intermediate rendering result, to obtain the hole filling result comprises:
performing hole filling on the reconstructed image based on the first intermediate rendering result and the reprojection pixel in the reconstructed image, to obtain the hole filling result.

15. The method according to claim 13 or 14, wherein performing hole filling on the reconstructed image based on the first intermediate rendering result, to obtain the hole filling result comprises:
performing hole filling on the reconstructed image based on the first intermediate rendering result and a target pixel of the reprojection pixel in the reconstructed image, to obtain the hole filling result, wherein the target pixel is a pixel whose distance from the reprojection pixel is less than a first threshold in the reconstructed image.

16. The method according to any one of claims 13 to 15, wherein performing hole filling on the reconstructed image based on the first intermediate rendering result, to obtain the hole filling result comprises:
performing hole filling on the reconstructed image based on the first intermediate rendering result and a non-to-be-filled pixel, to obtain the hole filling result, wherein the non-to-be-filled pixel is a pixel that passes validity check in the to-be-generated virtual reference block.

17. A decoding method, applied to a device-side device, wherein the method comprises:
receiving a bitstream;
decoding the bitstream to obtain a residual image of a current image;
performing rendering on a three-dimensional scene to obtain a rendered image, wherein an intermediate rendering result is generated in the rendering process, and the intermediate rendering result comprises a first intermediate rendering result;
performing a target operation on a reconstructed image based on the first intermediate rendering result, to generate a virtual reference block, wherein the target operation comprises at least one of reprojection, validity check, weighted averaging, hole filling, or intra-frame noise reduction;
predicting the rendered image based on the virtual reference block, to obtain a predicted image; and
performing reconstruction based on the predicted image and the residual image, to obtain a reconstructed image of the current image.

18. The method according to claim 17, wherein the method further comprises:
sending device-side device information to a cloud-side device.

19. The method according to claim 17 or 18, wherein decoding the bitstream comprises:
decoding the bitstream to obtain the residual image of the current image; and
decoding the bitstream to obtain indication information, wherein the indication information comprises first indication information, and when the first indication information is a first value, the indication information further comprises second indication information; and/or
when the second indication information is a second value, the indication information further comprises third indication information.

20. The method according to any one of claims 17 to 19, wherein the method further comprises:
receiving the indication information from the cloud-side device, wherein the indication information comprises the first indication information, and when the first indication information is the first value, the indication information further comprises the second indication information; and/or
when the second indication information is the second value, the indication information further comprises the third indication information.

21. The method according to any one of claims 17 to 20, wherein the method further comprises:
determining the first intermediate rendering result based on the target operation.

22. The method according to any one of claims 17 to 21, wherein the target operation comprises validity check, and performing the target operation on the reconstructed image based on the first intermediate rendering result, to generate the virtual reference block comprises:
performing validity check on a reprojection pixel in the reconstructed image based on the first intermediate rendering result, to obtain a validity check result, wherein the validity check result indicates whether a to-be-detected pixel of a to-be-generated virtual reference block passes validity check, and the validity check result is used to generate the virtual reference block.

23. The method according to claim 22, wherein performing validity check on the reprojection pixel in the reconstructed image based on the first intermediate rendering result, to obtain the validity check result comprises:
inversely reprojecting the reprojection pixel into the to-be-generated virtual reference block based on the first intermediate rendering result, to obtain inverse reprojection pixel coordinates of the reprojection pixel; and
obtaining the validity check result based on the inverse reprojection pixel coordinates and pixel coordinates of the to-be-detected pixel.

24. The method according to claim 22 or 23, wherein performing validity check on the reprojection pixel in the reconstructed image based on the first intermediate rendering result, to obtain the validity check result comprises:
projecting, based on the first intermediate rendering result, the reprojection pixel and the to-be-detected pixel into a world coordinate system, to obtain world coordinates of the reprojection pixel and world coordinates of the to-be-detected pixel; and
obtaining the validity check result based on the world coordinates of the reprojection pixel and the world coordinates of the to-be-detected pixel.

25. The method according to any one of claims 22 to 24, wherein performing validity check on the reprojection pixel in the reconstructed image based on the first intermediate rendering result, to obtain the validity check result comprises:
obtaining the validity check result based on the first intermediate rendering result, target information corresponding to the reprojection pixel, and target information of the to-be-detected pixel, wherein the target information comprises at least one of an object identifier (Object ID), a mesh identifier (Mesh ID), or a material identifier (Material ID).

26. The method according to any one of claims 17 to 25, wherein the target operation comprises weighted averaging, and performing the target operation on the reconstructed image based on the first intermediate rendering result, to generate the virtual reference block comprises:
performing weighted averaging on the reconstructed image based on the first intermediate rendering result, to obtain a weighted averaging result, wherein the weighted averaging result indicates a weighted averaged pixel value of the to-be-generated virtual reference block, and the weighted averaging result is used to generate the virtual reference block.

27. The method according to claim 26, wherein performing weighted averaging on the reconstructed image based on the first intermediate rendering result, to obtain the weighted averaging result comprises:
performing weighted averaging based on the first intermediate rendering result, a pixel value of a pixel in the reconstructed image, and an image sequence number of the reconstructed image, to obtain the weighted averaging result.

28. The method according to claim 26 or 27, wherein performing weighted averaging on the reconstructed image based on the first intermediate rendering result, to obtain the weighted averaging result comprises:
performing weighted averaging based on the first intermediate rendering result, the pixel value of the pixel in the reconstructed image, world coordinates of the pixel in the reconstructed image, and world coordinates of a pixel in the to-be-generated virtual reference block, to obtain the weighted averaging result.

29. The method according to any one of claims 26 to 28, wherein performing weighted averaging on the reconstructed image based on the first intermediate rendering result, to obtain the weighted averaging result comprises:
performing weighted averaging based on the first intermediate rendering result, the pixel value of the pixel in the reconstructed image, pixel coordinates of the pixel in the reconstructed image, and pixel coordinates of the pixel in the to-be-generated virtual reference block, to obtain the weighted averaging result.

30. The method according to any one of claims 17 to 29, wherein the target operation comprises hole filling, and performing the target operation on the reconstructed image based on the first intermediate rendering result, to generate the virtual reference block comprises:
performing hole filling on the reconstructed image based on the first intermediate rendering result, to obtain a hole filling result, wherein the hole filling result indicates a pixel value of a to-be-filled pixel after hole filling, the to-be-filled pixel is a pixel that fails to pass validity check in the to-be-generated virtual reference block, and the hole filling result is used to generate the virtual reference block.

31. The method according to claim 30, wherein performing hole filling on the reconstructed image based on the first intermediate rendering result, to obtain the hole filling result comprises:
performing hole filling on the reconstructed image based on the first intermediate rendering result and the reprojection pixel in the reconstructed image, to obtain the hole filling result.

32. The method according to claim 30 or 31, wherein performing hole filling on the reconstructed image based on the first intermediate rendering result, to obtain the hole filling result comprises:
performing hole filling on the reconstructed image based on the first intermediate rendering result and a target pixel of the reprojection pixel in the reconstructed image, to obtain the hole filling result, wherein the target pixel is a pixel whose distance from the reprojection pixel is less than a first threshold in the reconstructed image.

33. The method according to any one of claims 30 to 32, wherein performing hole filling on the reconstructed image based on the first intermediate rendering result, to obtain the hole filling result comprises:
performing hole filling on the reconstructed image based on the first intermediate rendering result and a non-to-be-filled pixel, to obtain the hole filling result, wherein the non-to-be-filled pixel is a pixel that passes validity check in the to-be-generated virtual reference block.

34. An encoding apparatus, wherein the encoding apparatus comprises a rendering module, an encoder, and a communication module, wherein
the rendering module is configured to perform rendering on a three-dimensional scene to obtain a rendered image, wherein an intermediate rendering result is generated in the rendering process, and the intermediate rendering result comprises a first intermediate rendering result;
the rendering module is further configured to perform a target operation on a reconstructed image based on the first intermediate rendering result, to generate a virtual reference block, wherein the target operation comprises at least one of reprojection, validity check, weighted averaging, hole filling, or intra-frame noise reduction;
the encoder is configured to predict the rendered image based on the virtual reference block, to obtain a predicted image;
the encoder is further configured to encode a residual image between the predicted image and the rendered image to obtain a bitstream; and
the communication module is configured to send the bitstream.

35. A decoding apparatus, wherein the decoding apparatus comprises a rendering module, a decoder, and a communication module, wherein
the communication module is configured to receive a bitstream;
the decoder is configured to decode the bitstream to obtain a residual image of a current image;
the rendering module is configured to perform rendering on a three-dimensional scene to obtain a rendered image, wherein an intermediate rendering result is generated in the rendering process, and the intermediate rendering result comprises a first intermediate rendering result;
the rendering module is further configured to perform a target operation on a reconstructed image based on the first intermediate rendering result, to generate a virtual reference block, wherein the target operation comprises at least one of reprojection, validity check, weighted averaging, hole filling, or intra-frame noise reduction;
the decoder is further configured to predict the rendered image based on the virtual reference block, to obtain a predicted image; and
the decoder is further configured to perform reconstruction based on the predicted image and the residual image, to obtain a reconstructed image of the current frame.

36. A device-cloud collaboration system, comprising the encoding apparatus according to claim 34 and the decoding apparatus according to claim 35.

37. An encoder, comprising a processing circuit configured to perform the method according to any one of claims 1 to 16.

38. A decoder, comprising a processing circuit configured to perform the method according to any one of claims 17 to 33.

39. An encoder, comprising:
one or more processors; and
a non-transitory computer-readable storage medium coupled to the processor and storing a program executed by the processor, wherein when the program is executed by the processor, the encoder is enabled to perform the method according to any one of claims 1 to 16.

40. A decoder, comprising:
one or more processors; and
a non-transitory computer-readable storage medium coupled to the processor and storing a program executed by the processor, wherein when the program is executed by the processor, the decoder is enabled to perform the method according to any one of claims 17 to 33.

41. A non-transitory computer-readable storage medium, comprising program code, wherein when the program code is executed by a computer device, the program code is used to perform the method according to any one of claims 1 to 33.

42. A non-transitory storage medium, comprising the bitstream in the method according to any one of claims 1 to 33.

43. A computer program product, comprising program code, wherein when the program code is executed on a computer or a processor, the program code is used to perform the method according to any one of claims 1 to 33.
